# EUROPEAN PATENT SPECIFICATION

(11) **EP 2 693 896 B1**
(45) Date of publication and mention of the grant of the patent: **12.09.2018**
(21) Application number: 12767806.8
(22) Date of filing: 09.04.2012
(51) Int. Cl.: A23G 1/00, A23G 1/52, A23G 1/56, A23G 3/36, A23G 9/32, A23L 27/20, A23L 33/105

(54) **FRUITY FLAVORED COCOA PRODUCTS AND PROCESSES FOR PRODUCING SUCH COCOA PRODUCTS**
KAKAOPRODUKTE MIT FRUCHTAROMA UND VERFAHREN ZUR HERSTELLUNG SOLCHER KAKAOPRODUKTE
PRODUITS CACAOTÉS À SAVEUR FRUITÉE ET LEURS PROCÉDÉS DE PRODUCTION

(30) Priority: 08.04.2011 US 201161473246 P
(43) Date of publication of application: 12.02.2014
(73) Proprietor: Olam International Limited, Singapore 038989 (SG)
(72) Inventor: ANIJS, Harrold Glenn, NL-1318 Almere (NL)
(74) Representative: dompatent von Kreisler Selting Werner - Partnerschaft von Patent- und Rechtsanwälten mbB
(86) International application number: PCT/US2012/032711
(87) International publication number: WO 2012/139096

(56) References cited:
- WO-A1-02/063974
- DE-B- 1 044 578
- DE-B- 1 136 893
- US-A- 4 243 688
- US-A1- 2005 175 765
- US-A1- 2009 130 284
- US-A1- 2009 324 798
- US-A1- 2010 151 087
- US-B1- 6 494 716
- FRAUENDORFER ET AL.: 'Changes in Key Aroma Compounds of Criollo Cocoa Beans During Roasting.' J. AGRIC. FOOD CHEM. vol. 56, no. 21, 2008, pages 10244 - 10251, XP055106676

## Description

### TECHNICAL FIELD

Methods for producing cocoa products with fruity flavors are disclosed. Cocoa products including, without limitation, cocoa powders and cocoa liquors produced according to such methods are also disclosed, as well as food products including such cocoa products.

### BACKGROUND ART

Cocoa bean processing includes fermenting harvested beans, drying the beans, de-hulling the beans to produce nibs, sterilizing the nibs, roasting the nibs, crushing the nibs into cocoa liquor, and optionally pressing the cocoa liquor to obtain cocoa butter and cocoa powder. Variations in this process also are known. Dutched cocoa powder is produced by alkalizing the nibs prior to roasting. Alkalization is a process where nibs are heated in water in the presence of sodium, potassium, ammonium, or magnesium hydroxide or carbonate, for example and without limitation, potash (K₂CO₃). The alkalization process alters the flavor, coloring, and solubility of the cocoa powder in water.

Current commercial demands require a cocoa manufacturer to produce cocoa products in a broad palette of colors, flavors, or both. While each manufacturer understands that manipulation of processing conditions such as temperature, water content, duration of processing time, and pH will affect the color and flavor of the cocoa powder produced, there is no general consensus as to how to produce a cocoa product of a consistently desirable color, flavor, or both.

US Patent Application Publication US 2008/0107783 describes methods of producing bright red, brown, and red-brown cocoa products. Such publication discloses novel colored cocoa products and uses thereof. DE 1136893 and DE 1044578 disclose a method for influencing the taste and aroma of cocoa beans by using a solution of formic acid, oxalic acid, tartaric acid or acetic acid, possible together with malic acid and/or phosphoric acid.

International Publication WO 2009/067533 describes a process for producing acidified red cocoa products and ingredients. Such methods are performed on under-fermented or unfermented cocoa beans that are treated with an acid, such as hydrochloric or phosphoric acid. Frauendorfer et al. in J. Agric. Food Chem. vol. 56, no. 21, 2008, pages 10244-10251 discloses changes of key aroma compounds of criollo cocoa beans during roasting.

However, needs continually exist for processes for producing cocoa products having desired colors, flavors or both.

### DISCLOSURE OF INVENTION

In one embodiment, a cocoa product having a fruity flavor comprises an increased amount of a fruity aroma compounds.

In another embodiment, a method for producing a cocoa product having a fruity flavor comprises mixing cocoa nibs, de-shelled cocoa beans, or a combination thereof with an acid and water, and roasting the acidified nibs, the acidified de-shelled cocoa beans, or the combination thereof.

### BRIEF DESCRIPTION OF THE DRAWINGS

FIG. 1 is a spider graph of flavor compounds present in various embodiments of fruity cocoa products of the present invention.
FIG. 2 is a spider graph showing the relative concentrations of six flavor compounds of FIG. 1.
FIG. 3 is a spider graph of flavor compounds present in various embodiments of fruity cocoa products of the present invention.
FIG. 4 is a spider graph showing the relative concentrations of six flavor compounds of FIG. 3.
FIG. 5 is a spider graph of flavor compounds present in various embodiments of fruity cocoa products of the present invention.
FIG. 6 is a spider graph showing the relative concentrations of six flavor compounds of FIG. 5.
FIG. 7 is a spider graph of flavor compounds present in various embodiments of fruity cocoa products of the present invention.
FIG. 8 is a spider graph showing the relative concentrations of six flavor compounds of FIG. 7.
FIG. 9 is a spider graph of flavor compounds present in various embodiments of fruity cocoa products of the present invention.
FIG. 10 is a spider graph of flavor compounds present in various embodiments of fruity cocoa products of the present invention.
FIG. 11 is a graph illustrating the amount of flavor compounds present in various embodiments of fruity cocoa products of the present invention.
FIG. 12 is a spider graph of flavor compounds present in various embodiments of fruity cocoa products of the present invention.
FIG. 13 is a graph illustrating a ratio of flavor compounds present in various embodiments of fruity cocoa products of the present invention as compared to a reference Arriba cocoa product.
FIG. 14 is a spider graph of the ratio of flavor compounds depicted in FIG. 13.
FIG. 15 is a graph illustrating a ratio of flavor compounds present in various embodiments of fruity cocoa products of the present invention as compared to a reference natural cocoa product.
FIG. 16 is a spider graph of the ratio of flavor compounds depicted in FIG. 15.
FIG. 17 is a graph illustrating a ratio of flavor compounds present in various embodiments of fruity cocoa products of the present invention as compared to a reference Arriba cocoa product.

### MODES FOR CARRYING OUT THE INVENTION

In one embodiment, fruity flavored cocoa products as defined in claim 1 are disclosed. The fruity flavored cocoa products have a fresh, fruity flavor and taste.

In one embodiment, a method for producing cocoa products having a fruity flavor as defined in claim 5 is disclosed. The method includes mixing cocoa nibs, de-shelled beans, or a combination thereof with an acid and water, and roasting the acidified cocoa nibs, de-shelled beans, or the combination thereof. In another embodiment, the acidified cocoa nibs, the acidified de-shelled, beans, or the combination thereof is washed with water.

The acid is selected from the group consisting of gluconic delta lactone acid, phosphoric acid, ascorbic acid, sodium bisulphate acid, and combinations of any thereof. The cocoa nibs, the de-shelled beans, or the combination thereof may be good fermented, under fermented, or a combination thereof.

In yet an additional embodiment, the nibs, the de-shelled beans, or the combination thereof are sterilized.

In an additional embodiment, the nibs, the de-shelled beans, or the combination thereof may be in contact with the acid for a period of from about 0.5 to about 4 hours, at a temperature of between about 15°C to about 90°C, or a combination of such time and temperature.

In another embodiment, the roast cocoa nibs, the roast de-shelled beans, or the combination thereof are roasted to a moisture content of less than about 2%.

In yet a further embodiment, the roast cocoa nibs, the roast de-shelled beans, or the combination thereof are ground, thus producing cocoa liquor. The cocoa liquor may be separated into cocoa butter and cocoa presscake, or the cocoa liquor may be defatted. The cocoa presscake may be further ground into cocoa powder.

After such processing, the beans or nibs may be further roasted and/or ground to cocoa liquor and, optionally, pressed into cocoa powder presscake and cocoa butter. The presscake may be ground to produce cocoa powder. This process yields cocoa products having fruity flavors and such cocoa products may be unusually bright, and typically red, brown and red-brown.

The cocoa product of the present invention comprises an amount of a fruity aroma compound of at least 2.5 µg/kg of ethyl-2-methylpropanoate, at least 7.5 µg/kg of ethyl-2-methylbutanoate, at least 10 µg/kg of ethyl-3-methylbutanoate, at least 50 µg/kg of phenylacetaldehyde and at least 100 µg/kg of furaneol.

The fruity flavored cocoa products of the present invention are cocoa powder, cocoa liquor, cocoa butter, or combinations of any thereof.

In another embodiment, the cocoa products of the present invention are desirable since the cocoa products have an increase in fruity flavors, yet have less bitterness. The bitterness may be associated with compounds such as polyphenols, pyrazines, non-volatile compounds, and combinations of any thereof. Thus, in another embodiment, cocoa products produced from good fermented cocoa beans having fruitier flavor and less bitterness as compared to cocoa products produced from under fermented or unfermented cocoa beans are disclosed. In another embodiment, the cocoa products of the present invention have less than 500 µg/kg of acrylamide, or less than 250 µg/kg of acrylamide.

Fruity flavored cocoa products are desired in certain food applications. For instance, fruity cocoa products may fit well with yoghurt flavored food products or other food flavors. In one embodiment, the cocoa products of the present invention have an increased amount of fruity aroma compounds or fruity compounds as compared to conventional cocoa products. Fruity aroma compounds include, but are not limited to, furaneol, phenylacetaldehyde, ethyl-2-methylpropanoate, ethyl-2-methylbutanoate, ethyl-2-methylbutanoate, and combinations of any thereof.

In another embodiment, the fruity flavored cocoa products of the present invention may have a bright color which refers to cocoa products with a C value more than about 18.0, 19.0, 20.0, 21.0, 22.0, 23.0, 24.0, 25.0, or higher, inclusive of intervals between those values. In another embodiment, the fruity flavored cocoa products of the present invention are red, redder, or more red which refers to a cocoa product having an H value approximately in the range of from about 35 to about 55, about 40 to about 45, or about 48 to about 56, (CIE 1976) that has an H value less than another, reference cocoa powder. In another embodiment, the fruity flavored cocoa products of the present invention are brown, browner, or more brown and refer to a cocoa product with an H value approximately in the range of from about 45 to about 55 (CIE 1976) that has an H value greater than another, reference cocoa powder.

In yet an additional embodiment, a fruity flavored cocoa product of the present invention has a color value selected from the group consisting of an L value of between about 18 to about 29, an L value of between about 22 to about 29, a C value of about 23 to about 30, an H value of between about 35 to about 55, and combinations of any thereof. Further, the fruity flavored cocoa product of the present invention may have a pH of between about 3 to about 6, a pH of between about 4.5 to about 6, or a pH of between about 4.5 to 5.

In one embodiment, a starting material for the processes described herein may be de-shelled cocoa beans which refers to any suitable cocoa bean fraction/product having the shells substantially removed, broken, and/or winnowed. Non-limiting examples of de-shelled cocoa beans include, but are not limited to, nibs, kernels, and cotyledons. De-shelled cocoa beans typically contain a small fraction of contaminating shells that are within commercially acceptable tolerances since no de-shelling process is 100% complete.

In another embodiment, a pH of the de-shelled cocoa beans may be manipulated by placing an acidic or alkaline agent in contact with the de-shelled cocoa beans. Optionally, after the acidic or alkaline agent is placed in contact with the de-shelled cocoa beans, the de-shelled cocoa beans may be washed. Alkalization agents are known in the art, and may include, but are not limited to, water and sodium, potassium, ammonium or magnesium hydroxide or carbonate, potash (K₂CO₃), and combinations of any thereof. Acid agents are known in the art and may include, without limitation food grade acids or organic acids. Examples of food grade acids include, but are not limited to, hydrochloric acid, sodium acid sulfate, sodium bisulphate acid, sodium acid phosphate, phosphoric acid, and combinations of any thereof. Examples of organic acids include, but are not limited to, gluconic acid, gluconic delta lactone acid, ascorbic acid, citric acid, lactic acid, lemon juice, lime juice, acetic acid, fumaric acid, adipic acid, malic acid, tartaric acid, and combinations of any thereof.

In an additional embodiment, the cocoa beans used to produce the fruity flavored cocoa products of the present invention are good fermented. In a further embodiment, the cocoa beans used to produce the fruity flavored cocoa products of the present invention are under- or un- fermented.

In a further embodiment, another process parameter that may help achieve optimal coloring of the fruity flavored cocoa product is to minimize sterilization of the beans or nibs prior to pH manipulation.

In one embodiment, the fruity flavored cocoa products produced herein are suitable for many commercial purposes, including, without limitation, food products. Examples of food products include, but are not limited to, chocolate, dark chocolate, milk chocolate, semi-sweet-chocolate, baking chocolate, candies, pralines, truffles, candy bars, flavoring syrup, confectionary coatings, compound coatings, fillings, beverages, milk, ice cream, beverage mixes, smoothies, soy milk, cakes, cheesecakes, cookies, pies, diet bars, meal-substitute solid foods and beverages, energy bars, chocolate chips, yogurt, yogurt drinks, pudding, mousse, mole, chocolates with lower bitterness, chocolate with fillings such as yogurt, cheesecake or fruit, and cocoa powders for use in cheese, dairy or beverages.

In another embodiment, fruity flavored cocoa products including, without limitation, powders and/or liquors having extraordinary brightness are produced by the methods described herein. The fruity flavored cocoa products may have an L color co-ordinate value greater than 16 or in a range of 22-29, a pH less than 7.0 or in a range of 3.0-6.0, and exhibit a high brightness expressed by a C color coordinate value greater than 20 or in a range of 23-30. H-values (CIE 1976) may fall in the red-to-brown range of between 35-55.

A number of objective methods for measuring the color of cocoa products are known. In one method, the Hunter color system or CIE 1976 (CIELAB) and like systems, color may be described in terms of three parameters: Lightness (L)--the light or dark aspect of a color, where the lower the L-value, the darker the cocoa powder will appear; Chroma (C)--the intensity of a color by which one distinguishes a bright or gray color, where the higher the C-value, the brighter the powder will be; and Hue (H)-- referring to color in daily speech, such as red, yellow, or blue. For cocoa powders, a low H value indicates a red color and a high H-value indicates a brown color.

The CIE 1976 color system describes colors in terms of coordinates L, "a*" and "b*". The L coordinate is consistent with the Value of Lightness, and from the a* and b* coordinates, the Chroma and Hue can be calculated as follows: C*= {square root over (a^{*2}+b^{*2})}; H=arctan(b*/a*).

The spectral color is the result of the source of light and the reflecting surface. For a good reproducible measurement of color, the source of light is standardized. There are two basic approaches for measuring color: visually or by instrumentation. There is a natural human tendency to trust only "one's own eyes." For this reason, colors are still frequently judged visually. To be able to do this in a reproducible manner, certain standard conditions should be met: the light source, for example and without limitation, a CIE standard light source; the positions of the sample, relative to the light source, which are preferably at an angle of 45° to each other; the background of the sample, uniform and preferably gray; the distance between the eyes and the sample and position of the eyes relative to the sample; and the size of the sample.

In practice, color cabinets are used with standard light sources for visual color determinations. Color meters and spectrophotometers are used for instrument color readings. Instrument color measurements were made in the Examples herein using a Datacolor Spectraflash 500 Color spectrophotometer in the manner described herein. Unless otherwise indicated, the color values described in the Examples, and all reference herein to color values L, C, H, a and b (a* and b*, respectively), are readings using the Datacolor Spectraflash 500 Color spectrophotometer. The color parameters described herein refer to the L, C, H parameters that can be calculated from L, a and b readings according to the CIE 1976 system. The color values recited herein are approximate in the sense that color measurements may vary from spectrophotometer-to-spectrophotometer, typically in the range of +/- 0.5 for L, C and H values. Therefore, the stated values for L, C and H are intended to include such variation inherent between spectrophotometers. The color values of cocoa powders, unless indicated otherwise, are obtained on samples of pulverized cocoa cakes (post pressing to remove cocoa butter) in water.

The following examples illustrate various non-limiting embodiments of the compositions within the present disclosure and are not restrictive of the invention as otherwise described or claimed herein.

### EXAMPLES

### Example 1. Production of cocoa products with ascorbic acid.

Under fermented Sulawesi beans were used to produce 2,000 grams of under-fermented nibs. The nibs were mixed with 3,000 mL of a 0.5M ascorbic acid solution having a temperature of 25°C in a plastic bucket having a volume of eight liters. After stirring, the nibs in the acid solution were placed in a stove with rotating air at a temperature of 25°C for four hours.

The wet, acidified nibs were drained to remove the excess acid solution. The drained nibs were rinsed several times with tap water until the pH of the watery residue coming off of the rinsed nibs was in the range of 3.2-5.0. After rinsing, the moisture content of the nibs was in the range of 44-50%.

The washed nibs were dried in a stove with rotating air at a temperature of 50°C for 20 hours to reduce the moisture content to the range of 3-5%. The dried nibs were roasted in a Retch fluidized bed dryer (i.e., jet roaster) for 15 minutes at a temperature of 110°C to lower the moisture to 1-2%.

The roasted nibs were ground to coarse liquor in a household coffee mill, and further ground to cocoa liquor of a desired fineness in a Retsch laboratory mortar mill.

A first portion of the fine ground liquor was extracted to obtain a fat free cocoa powder and a second portion of the fine ground liquor was hydraulic pressed into small cakes and filtered cocoa butter. The cakes were broken into small pieces and the pieces were pulverized into cocoa powder with a Retsch cutting mill with sieves having holes of 0.5 mm.

### Example 2. Production of cocoa products with ascorbic acid.

Under fermented Sulawesi beans were used to produce 2,000 grams of under-fermented nibs. The nibs were mixed with 3,000 mL of a 0.5M ascorbic acid solution having a temperature of 25°C in a plastic bucket having a volume of eight liters. After stirring, the nibs in the acid solution were placed in a stove with rotating air at a temperature of 25°C for four hours.

The wet, acidified nibs were drained to remove the excess acid solution. The drained nibs were rinsed several times with tap water until the pH of the watery residue coming off of the rinsed nibs was in the range of 3.2-5.0. After rinsing, the moisture content of the nibs was in the range of 44-50%.

The washed nibs were dried in a Retch fluidized bed dryer (i.e., jet roaster) for 75 minutes at a temperature of 120°C to reduce the moisture content to 1-2%.

The roasted nibs were ground to coarse liquor in a household coffee mill, and further ground to cocoa liquor of a desired fineness in a Retsch laboratory mortar mill.

A first portion of the fine ground liquor was extracted to obtain a fat free cocoa powder and a second portion of the fine ground liquor was hydraulic pressed into small cakes and filtered cocoa butter. The cakes were broken into small pieces and the pieces were pulverized into cocoa powder with a Retsch cutting mill with sieves having holes of 0.5 mm.

### Example 3. Production of cocoa products with gluconic delta lactone acid solution.

Under fermented Sulawesi beans were used to produce 2,000 grams of under-fermented nibs. The nibs were mixed with 3,000 mL of a 0.5 M gluconic delta lactone acid solution having a temperature of 25°C were mixed in a plastic bucket having a volume of eight liters. After stirring, the nibs in the acid solution were placed in a stove with rotating air at a temperature of 25°C for four hours.

The wet, acidified nibs were drained to remove the excess acid solution. The drained nibs were rinsed several times with tap water until the pH of the watery residue coming off of the rinsed nibs was in the range of 3.2-5.0. After rinsing, the moisture content of the nibs was in the range of 44-50%.

The washed nibs were dried in a stove with rotating air at a temperature of 50°C for 20 hours to reduce the moisture content to the range of 3-5%. The dried nibs were roasted in a Retch fluidized bed dryer (i.e., jet roaster) for 15 minutes at a temperature of 110°C to lower the moisture to 1-2%.

The roasted nibs were ground to coarse liquor in a household coffee mill, and further ground to cocoa liquor of a desired fineness in a Retsch laboratory mortar mill.

A first portion of the fine ground liquor was extracted to obtain a fat free cocoa powder and a second portion of the fine ground liquor was hydraulic pressed into small cakes and filtered cocoa butter. The cakes were broken into small pieces and the pieces were pulverized into cocoa powder with a Retsch cutting mill with sieves having holes of 0.5 mm.

### Example 4. Production of cocoa products with gluconic delta lactone acid solution.

Under fermented Sulawesi beans were used to produce 2,000 grams of under-fermented nibs. The nibs were mixed with 3,000 mL of a 0.5 M gluconic delta lactone acid solution having a temperature of 25°C were mixed in a plastic bucket having a volume of eight liters. After stirring, the nibs in the acid solution were placed in a stove with rotating air at a temperature of 25°C for four hours.

The wet, acidified nibs were drained to remove the excess acid solution. The drained nibs were rinsed several times with tap water until the pH of the watery residue coming off of the rinsed nibs was in the range of 3.2-5.0. After rinsing, the moisture content of the nibs was in the range of 44-50%.

The washed nibs were dried in a Retch fluidized bed dryer (i.e., jet roaster) for 75 minutes at a temperature of 120°C to reduce the moisture content to 1-2%.

The roasted nibs were ground to coarse liquor in a household coffee mill, and further ground to cocoa liquor of a desired fineness in a Retsch laboratory mortar mill.

A first portion of the fine ground liquor was extracted to obtain a fat free cocoa powder and a second portion of the fine ground liquor was hydraulic pressed into small cakes and filtered cocoa butter. The cakes were broken into small pieces and the pieces were pulverized into cocoa powder with a Retsch cutting mill with sieves having holes of 0.5 mm.

### Example 5. Production of cocoa products with sodium bisulphate acid solution.

Under fermented Sulawesi beans were used to produce 2,000 grams of under-fermented nibs. The nibs were mixed with 3,000 mL of a 0.5 M sodium bisulphate acid solution having a temperature of 25°C were mixed in a plastic bucket having a volume of eight liters. After stirring, the nibs in the acid solution were placed in a stove with rotating air at a temperature of 25°C for four hours.

The wet, acidified nibs were drained to remove the excess acid solution. The drained nibs were rinsed several times with tap water until the pH of the watery residue coming off of the rinsed nibs was in the range of 3.2-5.0. After rinsing, the moisture content of the nibs was in the range of 44-50%.

The washed nibs were dried in a stove with rotating air at a temperature of 50°C for 20 hours to reduce the moisture content to the range of 3-5%. The dried nibs were roasted in a Retch fluidized bed dryer (i.e., jet roaster) for 15 minutes at a temperature of 110°C to lower the moisture to 1-2%.

The roasted nibs were ground to coarse liquor in a household coffee mill, and further ground to cocoa liquor of a desired fineness in a Retsch laboratory mortar mill.

A first portion of the fine ground liquor was extracted to obtain a fat free cocoa powder and a second portion of the fine ground liquor was hydraulic pressed into small cakes and filtered cocoa butter. The cakes were broken into small pieces and the pieces were pulverized into cocoa powder with a Retsch cutting mill with sieves having holes of 0.5 mm.

### Example 6. Production of cocoa products with sodium bisulphate acid solution.

Under fermented Sulawesi beans were used to produce 2,000 grams of under-fermented nibs. The nibs were mixed with 3,000 mL of a 0.5 M sodium bisulphate acid solution having a temperature of 25°C were mixed in a plastic bucket having a volume of eight liters. After stirring, the nibs in the acid solution were placed in a stove with rotating air at a temperature of 25°C for four hours.

The wet, acidified nibs were drained to remove the excess acid solution. The drained nibs were rinsed several times with tap water until the pH of the watery residue coming off of the rinsed nibs was in the range of 3.2-5.0. After rinsing, the moisture content of the nibs was in the range of 44-50%.

The washed nibs were dried in a Retch fluidized bed dryer (i.e., jet roaster) for 75 minutes at a temperature of 120°C to reduce the moisture content to 1-2%.

The roasted nibs were ground to coarse liquor in a household coffee mill, and further ground to cocoa liquor of a desired fineness in a Retsch laboratory mortar mill.

A first portion of the fine ground liquor was extracted to obtain a fat free cocoa powder and a second portion of the fine ground liquor was hydraulic pressed into small cakes and filtered cocoa butter. The cakes were broken into small pieces and the pieces were pulverized into cocoa powder with a Retsch cutting mill with sieves having holes of 0.5 mm.

### Example 7. Production of cocoa products with phosphoric acid.

Under fermented Sulawesi beans were used to produce 2,000 grams of under-fermented nibs. The nibs were mixed with 3,000 mL of a 0.16 M phosphoric acid solution having a temperature of 25°C were mixed in a plastic bucket having a volume of eight liters. After stirring, the nibs in the acid solution were placed in a stove with rotating air at a temperature of 25°C for four hours.

The wet, acidified nibs were drained to remove the excess acid solution. The drained nibs were rinsed several times with tap water until the pH of the watery residue coming off of the rinsed nibs was in the range of 3.2-5.0. After rinsing, the moisture content of the nibs was in the range of 44-50%.

The washed nibs were dried in a stove with rotating air at a temperature of 50°C for 20 hours to reduce the moisture content to the range of 3-5%. The dried nibs were roasted in a Retch fluidized bed dryer (i.e., jet roaster) for 15 minutes at a temperature of 110°C to lower the moisture to 1-2%.

The roasted nibs were ground to coarse liquor in a household coffee mill, and further ground to cocoa liquor of a desired fineness in a Retsch laboratory mortar mill

A first portion of the fine ground liquor was extracted to obtain a fat free cocoa powder and a second portion of the fine ground liquor was hydraulic pressed into small cakes and filtered cocoa butter. The cakes were broken into small pieces and the pieces were pulverized into cocoa powder with a Retsch cutting mill with sieves having holes of 0.5 mm.

### Example 8. Production of cocoa products with phosphoric acid.

Under fermented Sulawesi beans were used to produce 2,000 grams of under-fermented nibs. The nibs were mixed with 3,000 mL of a 0.16 M phosphoric acid solution having a temperature of 25°C were mixed in a plastic bucket having a volume of eight liters. After stirring, the nibs in the acid solution were placed in a stove with rotating air at a temperature of 25°C for four hours.

The wet, acidified nibs were drained to remove the excess acid solution. The drained nibs were rinsed several times with tap water until the pH of the watery residue coming off of the rinsed nibs was in the range of 3.2-5.0. After rinsing, the moisture content of the nibs was in the range of 44-50%.

The washed nibs were dried in a Retch fluidized bed dryer (i.e., jet roaster) for 75 minutes at a temperature of 120°C to reduce the moisture content to 1-2%.

The roasted nibs were ground to coarse liquor in a household coffee mill, and further ground to cocoa liquor of a desired fineness in a Retsch laboratory mortar mill.

A first portion of the fine ground liquor was extracted to obtain a fat free cocoa powder and a second portion of the fine ground liquor was hydraulic pressed into small cakes and filtered cocoa butter. The cakes were broken into small pieces and the pieces were pulverized into cocoa powder with a Retsch cutting mill with sieves having holes of 0.5 mm.

### Example 9. Production of reference or control cocoa product.

Under fermented Sulawesi beans were used to produce 2,000 grams of under-fermented nibs. These nibs were not placed in contact with an acid solution as described in Examples 1-8.

The nibs were dried in a Retch fluidized bed dryer (i.e., jet roaster) for 75 minutes at a temperature of 120°C to reduce the moisture content to 1-2%.

The roasted nibs were ground to coarse liquor in a household coffee mill, and further ground to cocoa liquor of a desired fineness in a Retsch laboratory mortar mill.

A first portion of the fine ground liquor was extracted to obtain a fat free cocoa powder and a second portion of the fine ground liquor was hydraulic pressed into small cakes and filtered cocoa butter. The cakes were broken into small pieces and the pieces were pulverized into cocoa powder with a Retsch cutting mill with sieves having holes of 0.5 mm.

Tables 1A and 1B show the process conditions used to produce the cocoa products of Examples 1-9.

**Table 1A. Process conditions of cocoa products of Examples 1-4 and the control or reference, Example 9.**

| Example number | Ex. 1 | Ex. 2 | Ex. 3 | Ex. 4 | Ex. 9 |
|---|---|---|---|---|---|
| nibs from 100% Bad fermented Sulawesi beans | | | | | |
| Charge Weight (g) | 2000 | 2000 | 2000 | 2000 | 2000 |
| moisture content (%) | 6.4 | 6.4 | 6.4 | 6.4 | 6.4 |
| Fat content (%) | 50.5 | 50.5 | 50.5 | 50.5 | 50.5 |

| Butter of Sulawesi nib | | | | | |
|---|---|---|---|---|---|
| Free Fatty Acid content (%) | 1.1 | 1.1 | 1.1 | 1.1 | 1.1 |
| Iodine value | 36.2 | 36.2 | 36.2 | 36.2 | 36.2 |

| Acidification with acid solution during 4 hrs | | | | | |
|---|---|---|---|---|---|
| 3000 g of acid solution (25°C) | Ascorbic | Ascorbic | GDL | GDL | |
| Acid solution (w%) | 8.1 | 8.1 | 8.2 | 8.2 | |
| Molarity (M) of acid solution (mol / liter) | 0.5 | 0.5 | 0.5 | 0.5 | |
| Specific weight (gram/liter) | 1039.3 | 1039.3 | 1051.1 | 1051.1 | |
| pH | 2.22 | 2.22 | 2.01 | 2.01 | |

| Charges of tap water for washing the nib | | | | | |
|---|---|---|---|---|---|
| Tap water for every washing step of the nibs (g) | 3000 | 3000 | 3000 | 3000 | |
| Temperature tap water (°C) | 21.6 | 21.6 | 20 | 20 | |
| pH of the tap water | 6.32 | 6.32 | 6.32 | 6.32 | |

| pH of the Watery residue | | | | | |
|---|---|---|---|---|---|
| after 4 hours acidification | 3.72 | 3.72 | 3.37 | 3.37 | |
| after first washing with tapwater | 3.88 | 3.88 | 3.55 | 3.55 | |
| after second washing with tap water | 3.97 | 3.97 | 3.66 | 3.66 | |
| after third washing with tap water | 4.07 | 4.07 | 3.75 | 3.75 | |
| Drying methods of the wet acidified nibs | Stove | Jet roast | Stove | Jet roast | Jet roast |

| Moisture content of the nib (%) : | | | | | |
|---|---|---|---|---|---|
| Raw unacidified nibs (w%) | 6.4 | 6.4 | 6.4 | 6.4 | 6.4 |
| After washings with water | 46.6 | 46.6 | 44.9 | 44.9 | 13.5 |
| After 20 hrs drying at 50 °C in the stove | 4.26 | | 4,9 | | |
| After 75 min Jet roasting at 120 °C (SP is 120 °C) | | 1.8 | | 1.9 | |
| After 25 min jet roasting at 100 °C (before grinding) | < 1 | < 1 | < 1 | < 1 | < 1 |

**Table 1B. Process conditions of cocoa products of Examples 5-8 and the control, Example 9.**

| Example number | Ex. 5 | Ex. 6 | Ex. 7 | Ex. 8 | Ex. 9 |
|---|---|---|---|---|---|
| nibs from 100% sulawesi beans (bad fermented) | | | | | |
| Charge Weight (g) | 2000 | 2000 | 2000 | 2000 | 2000 |
| moisture content (%) | 6.4 | 6.4 | 6.4 | 6.4 | 6.4 |
| Fat content (%) | 50.5 | 50.5 | 50.5 | 50.5 | 50.5 |

| Butter of raw nib | | | | | |
|---|---|---|---|---|---|
| Free Fatty Acid content (%) | 1.1 | 1.1 | 1.1 | 1.1 | |
| Iodine value | 36.2 | 36.2 | 36.2 | 36.2 | |

| Acidification with acid solution during 4 hrs | | | | | |
|---|---|---|---|---|---|
| 3000 g of acid solution (25 °C) | NaHSO4 | NaHSO4 | H3PO4 | H3PO4 | |
| Acid solution (w%) | 5.7 | 5.7 | 1.6 | 1.6 | |
| Molarity (M) of acid solution ( mol / liter | 0.51 | 0.51 | 0.16 | 0.16 | |
| Specific weight (gram/liter) | 1042.5 | 1042.5 | 1026.4 | 1026.4 | |
| pH | 0.86 | 0.86 | 1.45 | 1.45 | |

| Charges of tap water for washing the nib | | | | | |
|---|---|---|---|---|---|
| Tap water for every washing step of the nibs (g) | 3000 | 3000 | 3000 | 3000 | |
| Temperature tap water (°C) | 21.6 | 21.6 | 21.6 | 21.6 | |
| pH of the tap water | 6.32 | 6.32 | 6.32 | 6.32 | |

| pH of the Watery residue | | | | | |
|---|---|---|---|---|---|
| after 4 hours acidification | 1.63 | 1.63 | 3.64 | 3.64 | |
| after first washing with tap water | 2.12 | 2.12 | 4.09 | 4.09 | |
| after second washing with tap water | 2.32 | 2.32 | 4.58 | 4.58 | |
| after third washing with tap water | 2.52 | 2.52 | 4.99 | 4.99 | |
| after fourth washing with tap water | 2.68 | 2.68 | 5.06 | 5.06 | |
| after five washing with tap water | 2.82 | 2.82 | | | |
| after six washing with tap water | 2.96 | 2.96 | | | |
| after seven washing with tap water | 3.21 | 3.21 | | | |
| after eight washing with tap water | 3.45 | 3.45 | | | |
| after Nine washings with tap water | 3.72 | 3.72 | | | |
| Drying methods of the wet acidified nibs | Jet Roast | Stove | Jet roast | Stove | Jet roast |

| Moisture content of the nib (%) : | | | | | |
|---|---|---|---|---|---|
| Raw un acidified nibs (w%) | 6.4 | 6.4 | 6.4 | 6.4 | 6.4 |
| After washings with water | 47.6 | 47.6 | 43.5 | 43.5 | 13.5 |
| After 20 hrs drying at 50 °C in the stove | | 4.2 | | 4.3 | |
| After 75 min Jet roasting at 120 °C (SP is 120 °C) | 2.5 | | 2.5 | | |
| After 25 min jet roasting at 100 °C (before grinding) | < 1 | < 1 | < 1 | < 1 | < 1 |

The cocoa liquor, cocoa powder and cocoa butter produced in Examples 1-9 were characterized as shown in Table 2.

**Table 2. Color of cocoa liquor and cocoa powder of Examples 1-9.**

| Example number | 1 | 2 | 3 | 4 | 5 | 6 | 7 | 8 | 9 |
|---|---|---|---|---|---|---|---|---|---|
| Acid | Ascorbic | Ascorbic | GDL | GDL | NaHSO₄ | NaHSO₄ | H₃PO₄ | H₃PO₄ | |
| Drying in stove | X | | X | | | X | | X | |
| Drying in jet roaster | | X | | X | X | | X | | |

| Liquor | | | | | | | | | |
|---|---|---|---|---|---|---|---|---|---|
| Intrinsic Colour FFD (in water) | | | | | | | | | |
| L ffd | 27.58 | 25.44 | 25.51 | 23.65 | 23.18 | 25.58 | 23.30 | 24.28 | 23.26 |
| C ffd | 27.00 | 25.73 | 23.77 | 23.98 | 27.26 | 27.32 | 23.54 | 24.17 | 23.85 |
| H ffd | 52.14 | 50.09 | 48.32 | 48.53 | 42.25 | 39.44 | 49.02 | 50.67 | 53.31 |
| a ffd | 16.57 | 16.51 | 15.80 | 15.88 | 20.18 | 21.09 | 15.44 | 15.31 | 14.25 |
| b ffd | 21.32 | 19.74 | 17.75 | 17.97 | 18.33 | 17.35 | 17.77 | 18.69 | 19.12 |

| Powder | | | | | | | | | |
|---|---|---|---|---|---|---|---|---|---|
| pH | 4.52 | 4.53 | 4.38 | 4.48 | 3.4 | 3.47 | 4.76 | 4.72 | 5.96 |
| % moisture | 2.37 | 2.56 | 2.35 | 2.26 | 2.41 | 2.55 | 2.31 | 2.83 | 2.07 |
| % fat | 15.67 | 13.88 | 14.92 | 12.98 | 13.78 | 13.93 | 13.56 | 16.68 | 15.11 |

| Intrinsic Colour (in water) | | | | | | | | | |
|---|---|---|---|---|---|---|---|---|---|
| L tot | 30.13 | 27.67 | 27.87 | 25.64 | 25.26 | 27.78 | 25.37 | 26.94 | 25.53 |
| C tot | 27.89 | 26.56 | 24,55 | 24.75 | 28.12 | 28.05 | 24.34 | 25.17 | 24.80 |
| H tot | 52.74 | 50.57 | 48.80 | 48.91 | 42.57 | 39.76 | 49.42 | 51.22 | 53.74 |
| a tot | 16.88 | 16.87 | 16.17 | 16.27 | 20.71 | 21.57 | 15.84 | 15.77 | 14.67 |
| b tot | 22.2 | 20.52 | 18.47 | 18.65 | 19.02 | 17.94 | 18.49 | 19.62 | 20.00 |
| | | | | | | | | | |

| filtered Butter | | | | | | | | | |
|---|---|---|---|---|---|---|---|---|---|
| Free fatty acid (VVZ) | 1.02 | 1.00 | 1.00 | 0.99 | 1.08 | 1.03 | 1.00 | 0.94 | 1.06 |
| Iodine value(I.V.) | 36.2 | 36.3 | 36.2 | 36.2 | 36.2 | 36.2 | 36.3 | 36.3 | 36.1 |

Table 2 indicates that the strength of the acid solution and the drying method has an influence on the color and on the pH of the cocoa product produced. Also, drying in the jet roaster appears to make the final color darker and redder. The stronger acid solution also makes the color of the powders brighter and redder.

The color values L, C, and H were determined for the cocoa products of Examples 1-9 using the CIE LAB data color system. Such colors were also transformed into the color values L, a, and B of the Hunter Lab color system. These colors are shown in Table 3.

**Table 3. Color values of cocoa products of Examples 1-8 and the control, Example 9.**

| Example | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|
| pH | 4.52 | 4.53 | 4.38 | 4.48 | 3.4 | 3.47 | 4.76 | 4.72 | 5.96 |

| CIE lab | | | | | | | | | |
|---|---|---|---|---|---|---|---|---|---|
| L tot | 30.13 | 27.67 | 27.87 | 25.64 | 25.26 | 27.78 | 25.37 | 26.94 | 25.53 |
| C tot | 27.89 | 26.56 | 24.55 | 24.75 | 28.12 | 28.05 | 24.34 | 25.17 | 24.80 |
| H tot | 52.74 | 50.57 | 48.80 | 48.91 | 42.57 | 39.76 | 49.42 | 51.22 | 53.74 |
| a tot | 16.88 | 16.87 | 16.17 | 16.27 | 20.71 | 21.57 | 15.84 | 15.77 | 14.67 |
| b tot | 22.2 | 20.52 | 18.47 | 18.65 | 19.02 | 17.94 | 18.49 | 19.62 | 20.00 |
| | | | | | | | | | |

| Hunter lab | | | | | | | | | |
|---|---|---|---|---|---|---|---|---|---|
| L tot | 25.08 | 23.10 | 23.26 | 21.51 | 21.21 | 23.19 | 21.30 | 22.52 | 21.42 |
| C tot | 15.50 | 14.61 | 13.82 | 13.50 | 15.99 | 16.79 | 13.19 | 13.71 | 13.00 |
| H tot | 48.31 | 46.00 | 45.72 | 44.78 | 36.63 | 35.26 | 45.45 | 47.31 | 49.57 |
| a tot | 10.31 | 10.15 | 9.65 | 9.58 | 12.84 | 13.71 | 9.25 | 9.29 | 8.43 |
| b tot | 11.58 | 10.51 | 9.89 | 9.51 | 9.54 | 9.70 | 9.40 | 10.08 | 9.89 |

An analysis was done on the cocoa powders produced in Examples 1-9. The results are shown in Tables 4A and 4B.

**Table 4A. Lab analysis results on cocoa powders of Examples 1-4 and the control, Example 9.**

| Example number | Ex. 1 | Ex. 2 | Ex. 3 | Ex. 4 | Ex. 9 |
|---|---|---|---|---|---|
| Type drying process | Jet roast | Stove | Stove | Jet roast | Jet roast |
| Potassium as K (%) | 0.5 | 0.5 | 0.49 | 0.47 | 2.0 |
| Sodium as Na (%) | 0.0068 | 0.0079 | 0.0047 | 0.0048 | 0.027 |
| Ash content (%) | 2.92 | 2.98 | 2.82 | 2.92 | 6.36 |
| Total alkalinity (ml/100g) | 30.54 | 31.7 | 25.83 | 26.16 | 75.12 |
| Total Iron as Fe (mg/kg) | 41 | 42 | 48 | 46 | 59 |
| Aluminium as Al (mg/kg) | 31 | 29 | 22 | 20 | 51 |
| Silicium as Si (%) | <0.01 | <0.01 | <0.01 | <0.01 | 0.02 |
| Phosphorous as P (%) | 0.54 | 0.55 | 0.61 | 0.35 | 0.89 |
| Sulphate as SO4 (%) | < 0.2 | < 0.2 | < 0.2 | < 0.2 | < 0.2 |
| Ochratoxin A (ug/kg) | < 0.4 | < 0.4 | < 0.4 | < 0.4 | < 0.4 |
| Acrylamide (ug/kg) | 100 | 160 | 170 | 190 | 830 |
| Acetic acid (%) | 0.05 | 0.06 | 0.06 | 0.06 | 0.26 |
| Citric acid (%) | 0.47 | 0.38 | 0.44 | 0.33 | 1.53 |
| Lactic acid (%) | 0.05 | 0.05 | 0.07 | 0.05 | 0.26 |

**Table 4B. Lab analysis results on cocoa powders of Examples 5-8 and the control, Example 9.**

| Example number | Ex. 5 | Ex. 6 | Ex. 7 | Ex. 8 | Ex. 9 |
|---|---|---|---|---|---|
| Type drying process | Jet roast | Stove | Jet roast | Stove | Jet roast |
| Potassium as K (%) | 0.15 | 0.18 | 0.59 | 0.54 | 2.0 |
| Sodium as Na (%) | 0.1 | 0.11 | 0.027 | 0.024 | 0.027 |
| Ash content (%) | 2.02 | 2.04 | 3.63 | 3.46 | 6.36 |
| Total alkalinity (ml/100g) | 13.78 | 12.46 | 24.71 | 26.58 | 75.12 |
| Total Iron as Fe (mg/kg) | 60 | 62 | 49 | 47 | 59 |
| Aluminium as Al (mg/kg) | 22 | 24 | 22 | 26 | 51 |
| Silicium as Si (%) | <0.01 | <0.01 | <0.01 | <0.01 | 0.02 |
| Phosphorous as P (%) | 0.43 | 0.45 | 0.61 | 0.41 | 0.89 |
| Sulphate as SO4 (%) | < 0.2 | < 0.2 | < 0.2 | < 0.2 | < 0.2 |
| Ochratoxin A (ug/kg) | < 0.4 | < 0.4 | < 0.4 | < 0.4 | < 0.4 |
| Acrylamide (ug/kg) | 140 | 85 | 280 | 320 | 830 |
| Acetic acid (%) | 0.05 | 0.03 | 0.07 | 0.07 | 0.26 |
| Citric acid (%) | 0.11 | 0.22 | 0.4 | 0.45 | 1.53 |
| Lactic acid (%) | 0.02 | 0.02 | 0.06 | 0.06 | 0.26 |

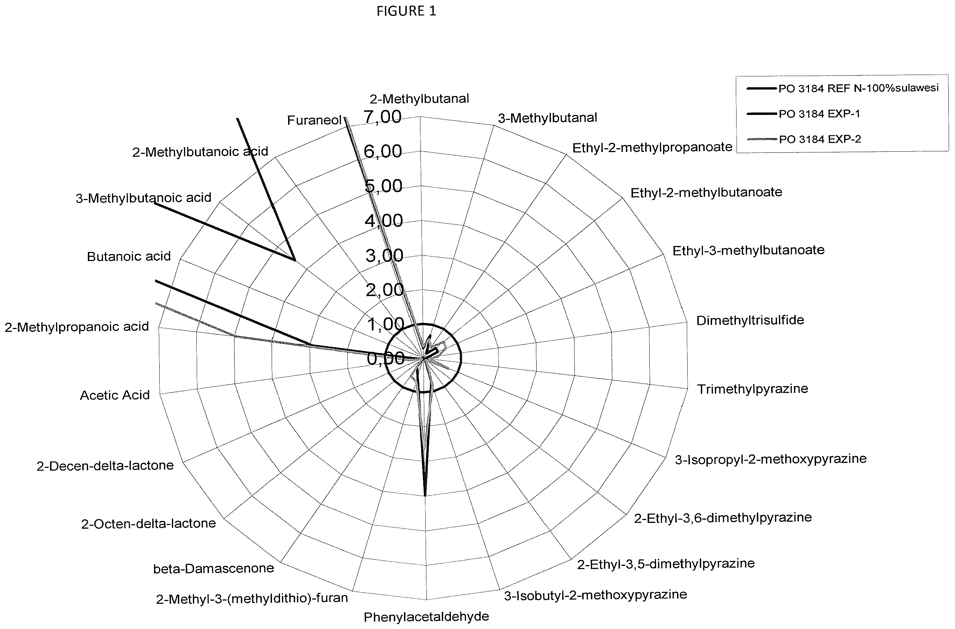

FIG. 1 shows a flavor profile of compounds present in the cocoa liquors produced in Ex. 1, Ex. 2, and the control, Ex. 9. Gas chromatography and mass spec was used to determine the amount of the compounds shown in FIG. 1. The graph in FIG. 1 shows ratios of the concentrations of compounds present in the cocoa liquors of Ex. 1, Ex. 2, and the control, Ex. 9.

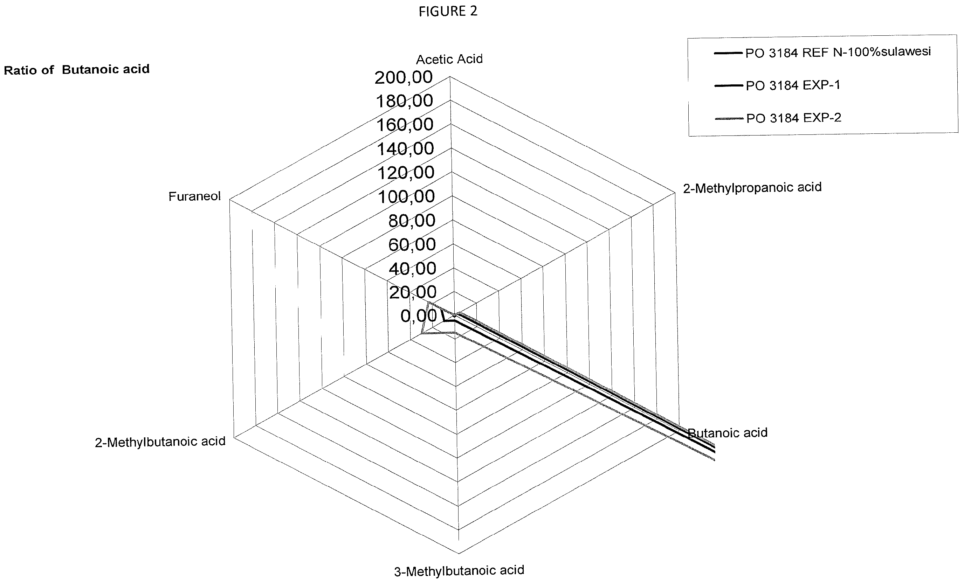

FIG. 2 shows a flavor profile of six compounds present in the cocoa liquors produced in Ex. 1, Ex. 2, and the control, Ex. 9. Gas chromatography and mass spec was used to determine the amount of the compounds shown in FIG. 2. The graph in FIG. 2 shows ratios of the concentrations of compounds present in the cocoa liquors of Ex. 1, Ex. 2, and the control, Ex. 9.

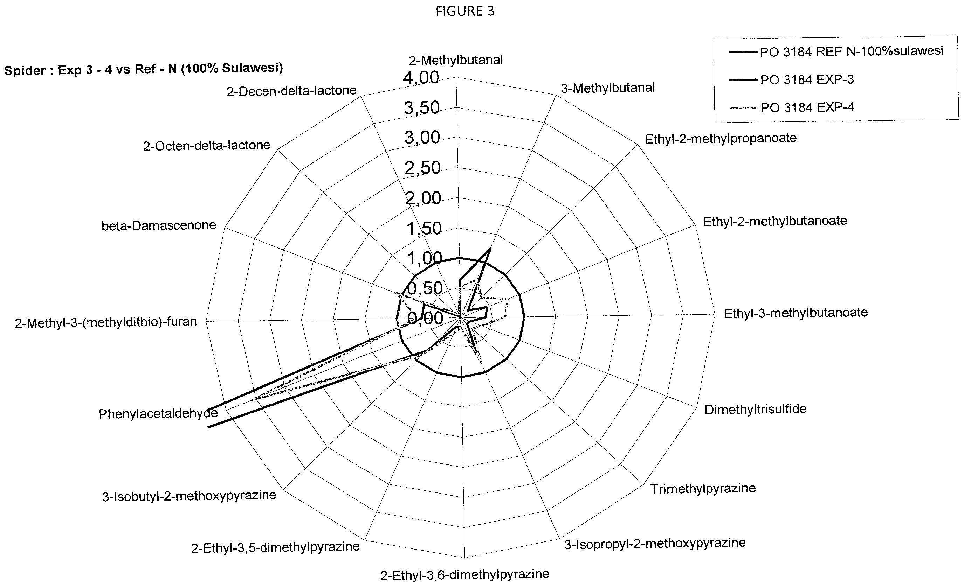

FIG. 3 shows a flavor profile of compounds present in the cocoa liquors produced in Ex. 3, Ex. 4, and the control, Ex. 9. Gas chromatography and mass spec was used to determine the amount of the compounds shown in FIG. 3. The graph in FIG. 3 shows ratios of the concentrations of compounds present in the cocoa liquors of Ex. 3, Ex. 4, and the control, Ex. 9.

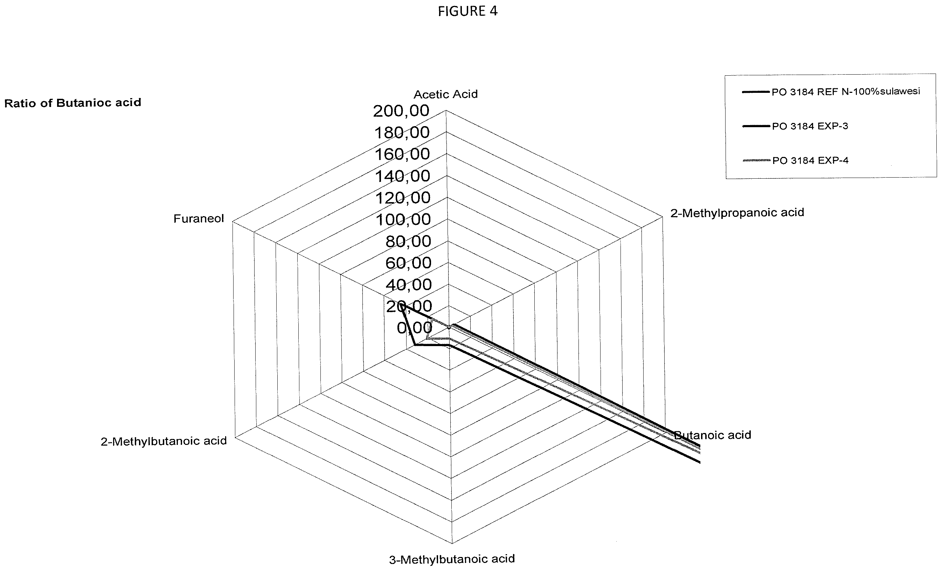

FIG. 4 shows a flavor profile of six compounds present in the cocoa liquors produced in Ex. 3, Ex. 4, and the control, Ex. 9. Gas chromatography and mass spec was used to determine the amount of the compounds shown in FIG. 4. The graph in FIG. 4 shows ratios of the concentrations of compounds present in the cocoa liquors of Ex. 3, Ex. 4, and the control, Ex. 9.

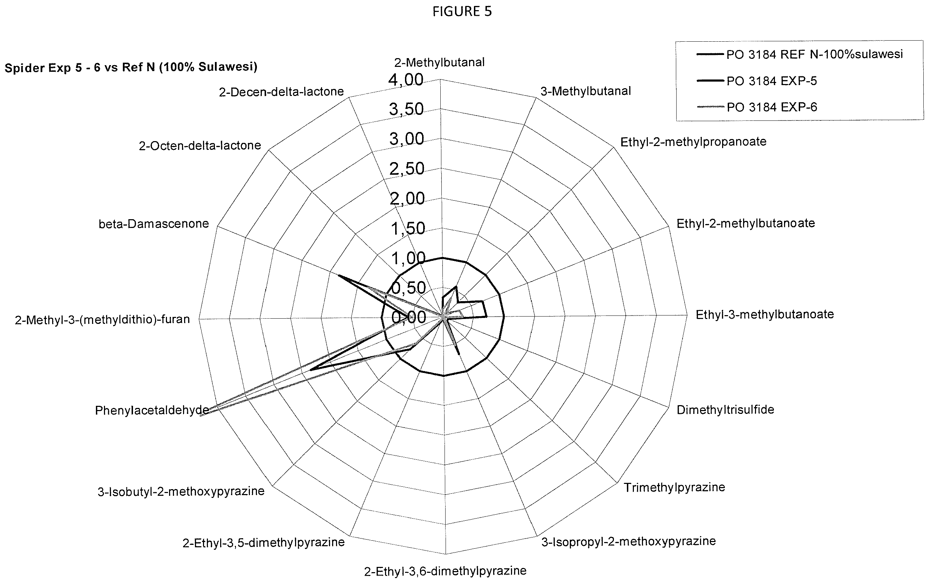

FIG. 5 shows a flavor profile of compounds present in the cocoa liquors produced in Ex. 5, Ex. 6, and the control, Ex. 9. Gas chromatography and mass spec was used to determine the amount of the compounds shown in FIG. 5. The graph in FIG. 5 shows ratios of the concentrations of compounds present in the cocoa liquors of Ex. 5, Ex. 6, and the control, Ex. 9.

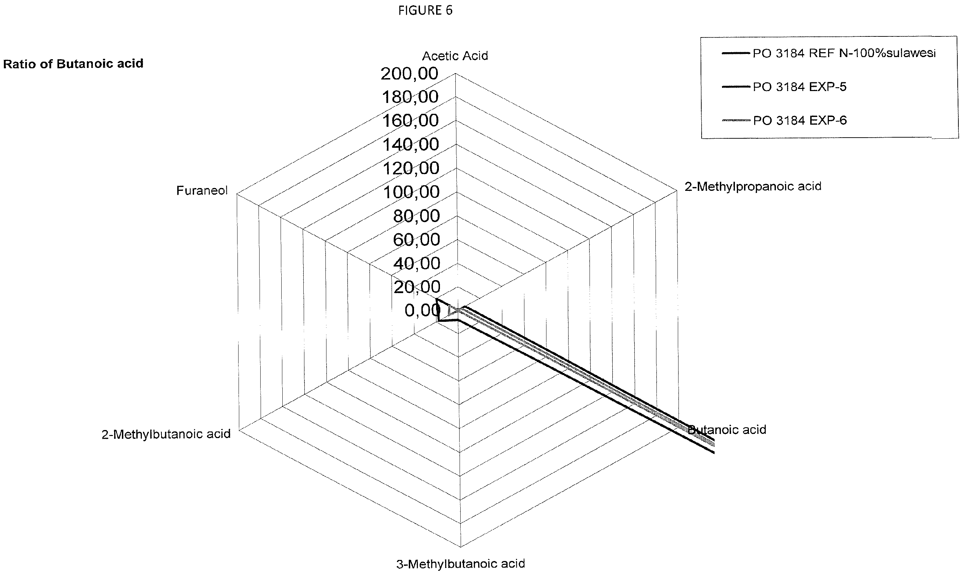

FIG. 6 shows a flavor profile of six compounds present in the cocoa liquors produced in Ex. 5, Ex. 6, and the control, Ex. 9. Gas chromatography and mass spec was used to determine the amount of the compounds shown in FIG. 6. The graph in FIG. 6 shows ratios of the concentrations of compounds present in the cocoa liquors of Ex. 5, Ex. 6, and the control, Ex. 9.

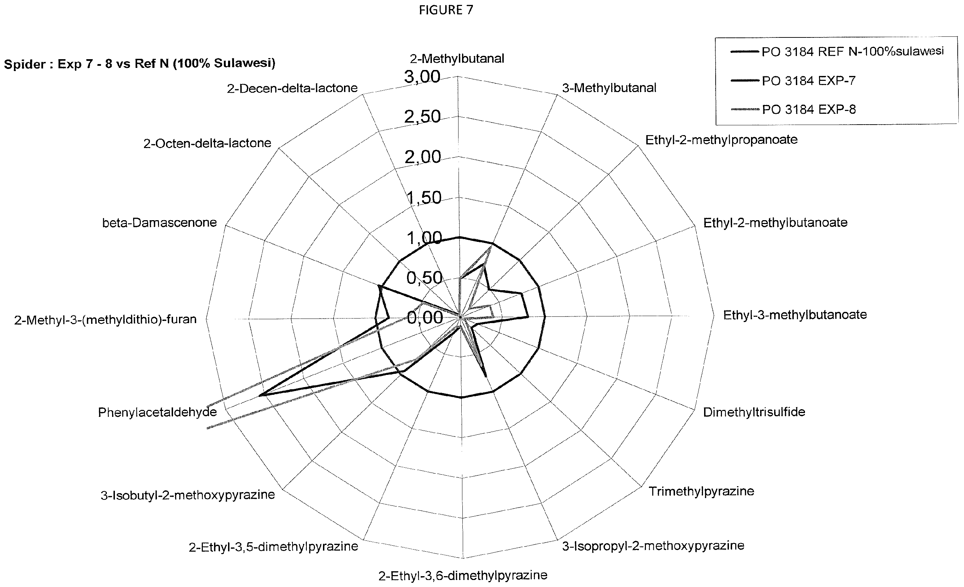

FIG. 7 shows a flavor profile of compounds present in the cocoa liquors produced in Ex. 7, Ex. 8, and the control, Ex. 9. Gas chromatography and mass spec was used to determine the amount of the compounds shown in FIG. 7. The graph in FIG. 7 shows ratios of the concentrations of compounds present in the cocoa liquors of Ex. 7, Ex. 8, and the control, Ex. 9.

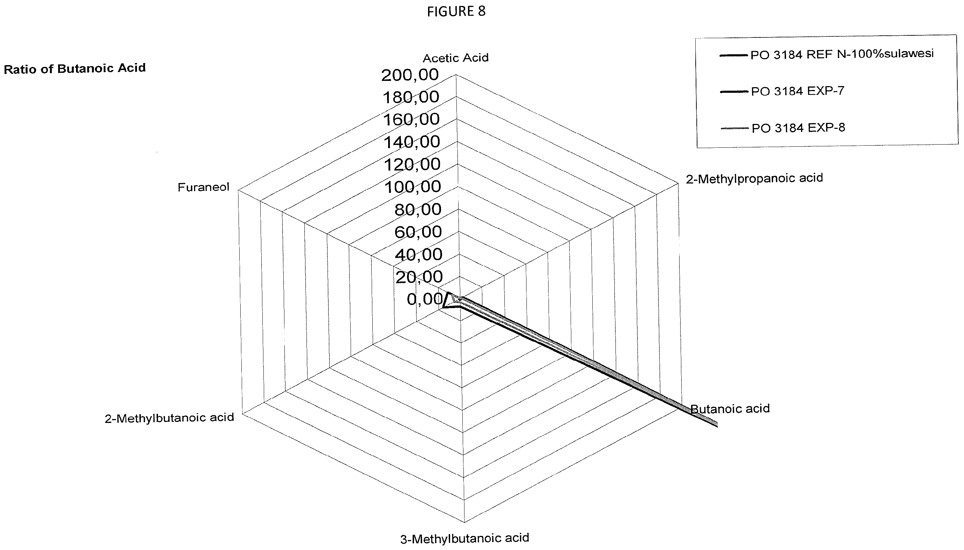

FIG. 8 shows a flavor profile of six compounds present in the cocoa liquors produced in Ex. 7, Ex. 8, and the control, Ex. 9. Gas chromatography and mass spec was used to determine the amount of the compounds shown in FIG. 8. The graph in FIG. 6 shows ratios of the concentrations of compounds present in the cocoa liquors of Ex. 7, Ex. 8, and the control, Ex. 9.

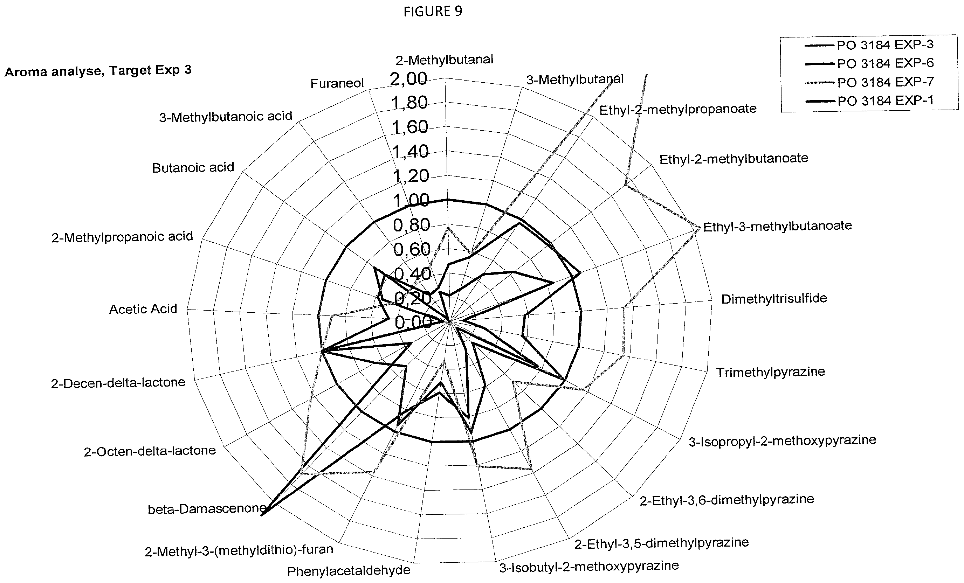

FIG. 9 shows a flavor profile of compounds present in the cocoa liquors produced in Ex. 1, Ex. 6, Ex. 7, and Ex. 3. Gas chromatography and mass spec was used to determine the amount of the compounds shown in FIG. 9. The graph in FIG. 9 shows ratios of the concentrations of compounds present in the cocoa liquors of Ex. 1, Ex. 6, Ex. 7, and Ex. 3.

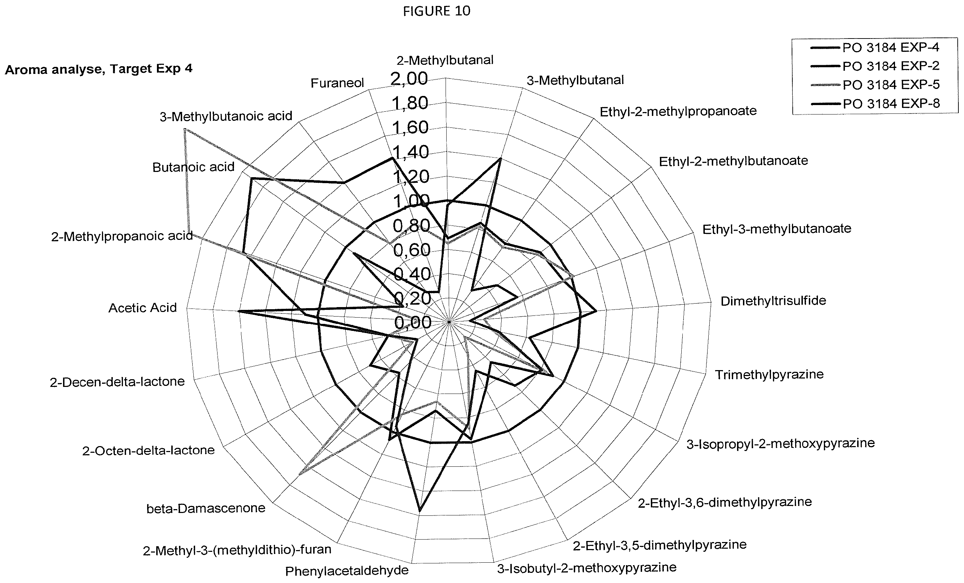

FIG. 10 shows a flavor profile of compounds present in the cocoa liquors produced in Ex. 2, Ex. 5, Ex. 8, and Ex. 4. Gas chromatography and mass spec was used to determine the amount of the compounds shown in FIG. 10. The graph in FIG. 10 shows ratios of the concentrations of compounds present in the cocoa liquors of Ex. 2, Ex. 5, Ex. 8, and Ex. 4.

Example 10. Production of fruity cocoa products with good fermented cocoa beans. Good fermented cocoa beans were 50% Ghana and 50%Ivory Coast-1, and a reference sample of 100% Arriba beans was used.

Charges of 2.50 kg of cocoa nibs obtained from the cocoa beans were sterilized for 30 minutes in a box with open steam at a temperature of 101°C, +/-0.1°C. The steam flow capacity was 2.4 kg/hr and the injected steam pressure was almost 0.1 bar. The sterilized nibs having the temperature of 101°C were loaded in a reactor with jacket heating where the temperature was reduced to 75-78°C. In the reactor, the nibs were heated to temperature of 90-95°C using the jacket heating.

An acid solution having a temperature of 20°C and 40°C was added to the nibs in the reactor for the acidification process. The average reaction temperature of the nibs was 55-95°C. Nib samples were taken after a desired acidification (reaction) time.

The nib samples 10-15 were roasted in a Retch fluidized bed dryer, which is a laboratory scale jet roaster. The nib samples 16-21 were roasted in a Miag Spit which is a direct roasting. During roasting, the moisture content of the nibs was reduced from 20-30% down to 1-2%. The roasted nibs were fist ground to coarse liquor with a household coffee mill and subsequently ground to cocoa liquor of a desired fineness with a Retsch laboratory mortal mill.

A first portion of the fine ground liquor was extracted to obtain fat free cocoa powder and a second portion of the fine ground liquor was hydraulic pressed into small cakes and filtered cocoa butter. The cakes were broken into smaller pieces which were pulverized into cocoa powder with a Retsch cutting mill using sieves of holes with 0.5 mm.

Samples 10-21 and the reference or control sample 22 were analyzed for: moisture content in the raw nib (before and after sterilization), the acidified nib, the roasted nib, and the cocoa liquor; pH of the liquor; aroma compound analysis of the liquor; and intrinsic color in water of the defatted liquor.

Tables 5A and 5B show process conditions and results for Samples 10-21. The reagents for Samples 10, 12, 14, and 17 were a phosphoric acid solution (0.64 M) and tap water, and the reagents for Samples 11, 13, 15, 16, and 28-21 were a gluconic delta lactone acid (GDL) solution (3.0 M) and tap water.

**Table 5A.**

| Sample No. | 10 | 11 | 12 | 13 | 14 | 15 |
|---|---|---|---|---|---|---|
| %GDL added at 40°C | | 20 | | 20 | | 20 |
| %H3PO4 added at 20°C | 20 | | 20 | | 20 | |
| Reaction temp of nibs in reactor (°C) | 55 | 55 | 55 | 55 | 55 | 55 |
| Reaction time (min) | 60 | 60 | 180 | 180 | 120 | 120 |

| Moisture content of nibs (%) | | | | | | |
|---|---|---|---|---|---|---|
| Raw nib | 8.07 | 7.94 | 8.07 | 7.94 | 8.07 | 7.94 |
| After sterilization | 14.14 | 16.14 | 14.14 | 16.14 | 14.14 | 16.14 |
| After acidification | 27.27 | 25.17 | 26.16 | 24.95 | 27.06 | 23.63 |
| After Roasting | 2.97 | 3.12 | 2.47 | 3.50 | 2.14 | 2.75 |

| Liquor | | | | | | |
|---|---|---|---|---|---|---|
| pH | 4.82 | 4.88 | 4.54 | 4.56 | 4.61 | 4.64 |
| Moisture content (%) | 0.8 | 0.82 | 0.92 | 0.78 | 0.88 | 0.83 |
| Jet roasting (fluidized bed dryer) | X | X | X | X | X | X |
| Miag Spit roasting (direct contact roasting) | | | | | | |

**Table 5B.**

| Sample No. | 16 | 17 | 18 | 19 | 20 | 21 |
|---|---|---|---|---|---|---|
| %GDL added at 40°C | 20 | | 20 | 20 | 10 | 10 |
| %H₃PO₄ added at 20°C | | 20 | | | | |
| Reaction temp of nibs in reactor (°C) | 55 | 55 | 80 | 80 | 80 | 80 |
| Reaction time (min) | 180 | 180 | 90 | 180 | 180 | 90 |

| Moisture content of nibs (%) | | | | | | |
|---|---|---|---|---|---|---|
| Raw nib | 7.84 | 7.84 | 7.81 | 7.81 | 7.65 | 7.65 |
| After sterilization | 12.82 | 13.14 | 13.47 | 13.47 | 14.47 | 14.47 |
| After acidification | 23.57 | 25.45 | 23.36 | 22.83 | 18.55 | 19.14 |
| After Roasting | 2.49 | 2.78 | 3.24 | 3.60 | 3.73 | 3.16 |

| Liquor | | | | | | |
|---|---|---|---|---|---|---|
| pH | 4.66 | 4.56 | 4.81 | 4.40 | 4.86 | 4.88 |
| Moisture content (%) | 0.80 | 0.82 | 0.78 | 0.82 | 0.70 | 0.80 |
| Jet roasting (fluidized bed dryer) | | | | | | |
| Miag Spit roasting (direct contact roasting) | X | X | X | X | X | X |

The amount of fruity aroma compounds in the liquor of Samples 10-21 and the control, Reference Sample 22, Arriba beans, was determined by GCMS analysis and the amount of such compounds are shown in Tables 6A and 6B. The amount of each compound is shown in µg/kg.

**Table 6A.**

| Compound | Arriba | 10 | 11 | 12 | 13 | 14 | 15 |
|---|---|---|---|---|---|---|---|
| Ethyl-2-methylpropanoate | 1.61 | 14.69 | 9.91 | 6.95 | 10.40 | 10.02 | 9.62 |
| Ethyl-2-methylbutanoate | 4.42 | 30.17 | 22.03 | 18.23 | 26.36 | 21.29 | 22.75 |
| Ethyl-3-methylbutanoate | 6.93 | 38.54 | 28.83 | 22.94 | 33.80 | 26.89 | 28.93 |
| Phenylacetaldehyde | 23.71 | 23.64 | 55.27 | 51.29 | 51.63 | 70.25 | 54.25 |
| Furaneol | 73.65 | 1467.25 | 1729.10 | 866.13 | 1791.88 | 1770.40 | 852.40 |

**Table 6B.**

| Compound | Arriba | 16 | 17 | 18 | 19 | 20 | 21 |
|---|---|---|---|---|---|---|---|
| Ethyl-2-methylpropanoate | 1.61 | 14.50 | 11.98 | 8.33 | 6.48 | 12.69 | 10.57 |
| Ethyl-2-methylbutanoate | 4.42 | 29.09 | 25.56 | 20.32 | 17.56 | 29.66 | 26.00 |
| Ethyl-3-methylbutanoate | 6.93 | 38.45 | 34.01 | 25.89 | 22.91 | 38.41 | 33.07 |
| Phenylacetaldehyde | 23.71 | 342.96 | 141.50 | 170.65 | 245.63 | 129.27 | 496.35 |
| Furaneol | 73.65 | 1967.78 | 1251.22 | 1763.02 | 1327.92 | 2927.81 | 1447.25 |

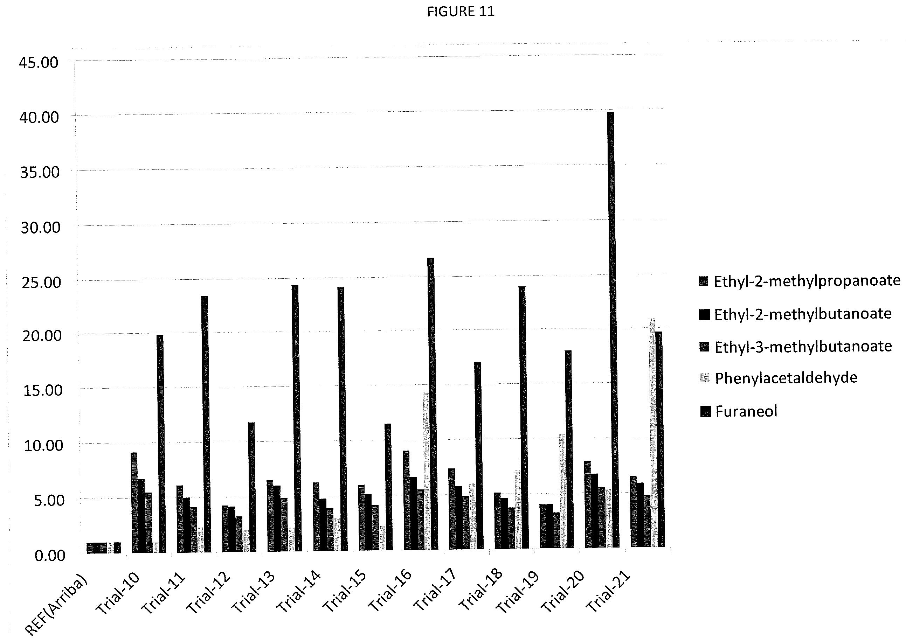

FIG. 11 shows the concentrations of the fruity compounds of Tables 6A and 6B in graphical form.

A ratio of the concentrations of the fruity compounds of Tables 6A and 6B using Arriba as a reference are shown in Tables 7A and 7B.

**Table 7A.**

| Compound | Arriba | 10 | 11 | 12 | 13 | 14 | 15 |
|---|---|---|---|---|---|---|---|
| Ethyl-2-methylpropanoate | 1.00 | 9.14 | 6.17 | 4.32 | 6.47 | 6.23 | 5.98 |
| Ethyl-2-methylbutanoate | 1.00 | 6.83 | 4.99 | 4.13 | 5.97 | 4.82 | 5.15 |
| Ethyl-3-methylbutanoate | 1.00 | 5.56 | 4.16 | 3.31 | 4.88 | 3.88 | 4.18 |
| Phenylacetaldehyde | 1.00 | 1.00 | 2.33 | 2.16 | 2.18 | 2.96 | 2.29 |
| Furaneol | 1.00 | 19.92 | 23.48 | 11.76 | 24.33 | 24.04 | 11.57 |

**Table 7B.**

| Compound | Arriba | 16 | 17 | 18 | 19 | 20 | 21 |
|---|---|---|---|---|---|---|---|
| Ethyl-2-methylpropanoate | 1.00 | 9.02 | 7.45 | 5.18 | 4.03 | 7.89 | 6.57 |
| Ethyl-2-methylbutanoate | 1.00 | 6.59 | 5.79 | 4.60 | 3.98 | 6.71 | 5.89 |
| Ethyl-3-methylbutanoate | 1.00 | 5.55 | 4.91 | 3.74 | 3.31 | 5.54 | 4.77 |
| Phenylacetaldehyde | 1.00 | 14.46 | 5.97 | 7.20 | 10.36 | 5.45 | 20.93 |
| Furaneol | 1.00 | 26.72 | 16.99 | 23.94 | 18.03 | 39.75 | 19.65 |

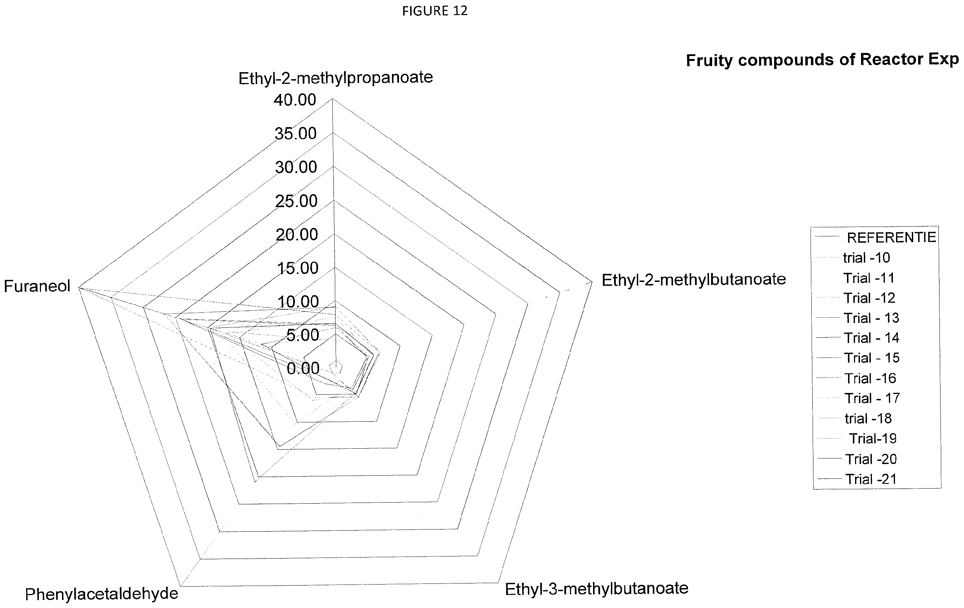

FIG. 12 shows a spider graph of the ratios of fruity compounds of Tables 7A and 7B.

### Example 11. Compound coatings produced with fruity cocoa products.

Three compound coatings were produced using the fruity cocoa powder of Example 3. The formulations of the three compound coatings are shown in Tables 8-10.

**Table 8. Yoghurt compound coating.**

| | |
|---|---|
| Sugar | 41.00% |
| Palm Kernel Stearin | 34.00% |
| Whey Powder | 10.00% |
| fruity cocoa powder Example 3 | 6.50% |
| Lactose | 5.00% |
| lecithin | 0.50% |
| D-13 Yoghurt Powder | 3.00% |
| total | 100.00% |

**Table 9. Compound coating with fruity cocoa powder.**

| | |
|---|---|
| Sugar | 54.00% |
| Palm Kernel Stearin | 29.00% |
| fruity cocoa powder Example 3 | 16.50% |
| lecithin | 0.50% |
| total | 100.00% |

**Table 10. Limon compound coating with fruity cocoa powder.**

| | |
|---|---|
| Sugar | 53.85% |
| Palm Kernel Stearin | 29.00% |
| fruity cocoa powder Example 3 | 16.50% |
| lecithin | 0.50% |
| Lime flavouring | 0.15% |
| total | 100.00% |

A sensory test was done to compare the limon compound coating of Table 10 produced with the fruity cocoa powder of Example 3 and a reference limon compound coating made with commercially available cocoa powder using the formulation of Table 10. The limon compound coating with the fruity cocoa powder had more acidity/fruity flavors, more bitterness, more bouquet, more sweet, and more aromatic flavors as compared to the reference limon compound coating using the commercially available cocoa powder.

Example 12. Production of fruity cocoa products with good fermented cocoa beans using various acids. Good fermented cocoa beans were 50% Ghana and 50%Ivory Coast-1.

The cocoa products produced in this Example were produced in substantially the same manner as the process described in Example 10, but using the acids in the amounts listed in Table 11.

**Table 11. Acids and color values of powders.**

| Sample | L-value | C-value | H-value | a-value | b-value | pH |
|---|---|---|---|---|---|---|
| Reference -natural, not treated with acid or alkali | 24.88 | 28.59 | 55.34 | 16.26 | 23.62 | 5.82 |
| Ascorbic acid 0.5 M | 25.23 | 29.35 | 53.80 | 17.33 | 23.68 | 4.46 |
| H₃PO₄ (1.55%) -by weight | 26.65 | 27.58 | 53.68 | 16.33 | 22.22 | 4.67 |
| NaHSO₄ (5.7%) -by weight | 24.02 | 29.08 | 49.97 | 18.70 | 22.27 | 3.50 |
| GDL (0.5 M) | 24.57 | 27.37 | 53.37 | 16.33 | 21.97 | 4.56 |

Example 13. Production of fruity cocoa products with good fermented cocoa beans using gluconic acid. Good fermented cocoa beans were 50% Ghana and 50%Ivory Coast-1.

Charges of 10,000 kg of cocoa nibs obtained from the cocoa beans were pre-heated with open steam pressure of 0.5 bar to a temperature of 100-105°C for 3-5 minutes. The 10,000 kg, pre-heated cocoa nib charges were placed into five different blenders and sterilized for 30 minutes with open steam at a steam pressure of 0.5 bar and a temperature of 100-105°C. After sterilization, 10% by weight of a 50% by weight solution of gluconic acid delta lactone having a temperature of 27-30°C was added to the cocoa nibs in the blender and the acidification process was started. The addition of the gluconic acid delta lactone solution slowly dropped the temperature of the cocoa nibs from 95°C to 88°C. No steam was added during the acidification process.

No air was injected into blenders 1-4 during the acidification process and blender 5 did have air injected. The acidification time was 90 minutes and the average reaction temperature of the nibs during the acidification process was 75-90°C for blenders 1-4. In blender 5, air was injected for 45 minutes according to the following schedule: 0-15 minutes, no air injection; 15-30 minutes, air was injected; 30-45 minutes, no air injection; 45-60 minutes, air was injected; 60-75 minutes, no air injection; and 75-90 minutes, air was injected.

The acidified nibs were roasted with a constant capacity of 4500 kg/hr. The roasted nibs were ground in a Buhler mill and a ball mill to produce cocoa liquor of the desired fineness. The pH, moisture content, intrinsic color in water of the defatted liquor, and presence of fruity flavor compounds were measured for the cocoa liquor. The cocoa liquor was also pressed into dry cakes having about 11% fat, and the dry cakes were also processed into cocoa powder. The pH, moisture content, intrinsic color in water, and presence of fruity flavor compounds were measured for the cocoa powder. During the process, samples were taken every hour.

A summary of the process conditions; pH, moisture content, and fat content of the cocoa liquor; and free fatty acid and iodine value of the cocoa butter produced are shown in Table 12.

**Table 12. Process conditions and results of measurements.**

| Blender No. | 1 | 2 | 3 | 4 5 | |
|---|---|---|---|---|---|
| Acidification time (minutes) | 90 | 90 | 90 | 90 | 90 |
| Gluconic acid (50% by weight solution) added | 10 | 10 | 10 | 10 | 10 |
| Blower time (minutes) | 0 | 0 | 0 | 0 | 45 |

| Nibs | | | | | |
|---|---|---|---|---|---|
| Moisture content of raw nib (%) | 7 | 7 | 7 | 7 | 7 |
| Moisture content of acidified nib (%) | 15.9 | 14.34 | 14.07 | 14.35 | 12.63 |
| Moisture content after 2^{nd} dryer (%) | 2.0-2.5 | 2.0-2.5 | 2.0-2.5 | 2.0-2.5 | 2.0-2.5 |
| Moisture content after nib cooler (%) | 1.90 | 1.80 | 1.60 | 1.70 | 1.70 |

| Cocoa liquor produced | | | | | |
|---|---|---|---|---|---|
| pH | 4.7 | 4.6 | 4.5 | 4.4 | 4.4 |
| Moisture content (%) | 1.2 | 1.1 | 1.1 | 1.1 | 1 |
| Fat content (%) | 51.3 | 51.6 | 52.2 | 51.9 | 51.5 |

| Butter produced | | | | | |
|---|---|---|---|---|---|
| Free Fatty Acid (%) | 1.7 | 1.7 | 1.7 | 1.6 | 1.6 |
| Iodine Value | 34.3 | 34.3 | 34.3 | 34.3 | 34.3 |

A summary of the percent moisture in the nib and liquor, percent fat in the liquor, pH of the liquor, and intrinsic color of the liquor in water are shown in Table 13.

**Table 13. Analysis of the cocoa liquor produced at various time intervals during the process.**

| Sampling time | Start of process | 1 hour | 2 hours | 3 hours | 4 hours | 5 hours | 6.5 hours | 6.75 hour | Reference Sample Natural liquor |
|---|---|---|---|---|---|---|---|---|---|
| % moisture in nib after nib cooler | 2.33 | 1.61 | 1.74 | 2.13 | 1.66 | 1.56 | 1.92 | 1.68 | 1.5 |
| % moisture in liquor produced | 1.27 | 1.06 | 1.03 | 1.08 | 1.07 | 1.08 | 1.08 | 1.01 | 1.01 |
| % fat in liquor | 50.61 | 52.01 | 51.25 | 52.1 | 52.1 | 52.37 | 51.9 | 51.52 | 54.89 |
| pH liquor | 4.84 | 4.61 | 4.55 | 4.57 | 4.46 | 4.41 | 4.43 | 4.40 | 5.58 |

| Intrinsic color in water | | | | | | | | | |
|---|---|---|---|---|---|---|---|---|---|
| L | 23.30 | 24.23 | 24.35 | 24.84 | 24.87 | 24.78 | 24.74 | 24.90 | 26.42 |
| C | 23.49 | 24.05 | 24.41 | 24.64 | 24.54 | 24.93 | 25.08 | 24.81 | 24.80 |
| H | 53.90 | 54.23 | 52.24 | 54.49 | 54.51 | 53.82 | 53.97 | 54.12 | 54.42 |
| a | 13.84 | 14.06 | 14.26 | 14.31 | 14.25 | 14.72 | 14.75 | 14.54 | 14.43 |
| b | 18.98 | 19.51 | 19.81 | 20.06 | 19.98 | 20.12 | 20.28 | 20.10 | 20.17 |

The average pH of the cocoa liquor during the run was about 4.65, the average fat content in the cocoa liquor during the run was about 51.7%, the average moisture content of the nib after the nib cooler was about 1.82%, and the average moisture content of the liquor produced during the run was about 1.08%. The color values of the cocoa liquor produced are comparable with those of the reference, natural liquor.

A summary of the percent moisture in the cocoa powder, percent fat in the cocoa powder, pH of the cocoa powder, and intrinsic color of the cocoa powder in water are shown in Table 13.

**Table 13. Analysis of the cocoa powder produced at various time intervals during the process. "ffd" refers to fat free dry matter or fat free cocoa powder.**

| Sampling time | Start of process | 1 hour | 2 hours | 3 hours | 4 hours | 5 hours | 6.5 hours | 6.75 hour | Reference Sample Natural liquor |
|---|---|---|---|---|---|---|---|---|---|
| % moisture powder | 3.45 | 3.04 | 2.99 | 3.57 | 3.91 | 3.02 | 2.79 | 2.53 | 4.04 |
| % fat in powder | 12.48 | 11.50 | 10.69 | 10.74 | 10.70 | 10.93 | 11.35 | 11.31 | 20.80 |
| pH powder | 4.72 | 4.54 | 4.47 | 4.52 | 4.45 | 4.48 | 4.47 | 4.60 | 5.60 |

| Intrinsic color in water of powder | | | | | | | | | |
|---|---|---|---|---|---|---|---|---|---|
| L | 21.78 | 23.21 | 23.87 | 25.21 | 23.85 | 23.96 | 23.94 | 24.84 | 25.72 |
| C | 23.35 | 23.81 | 24.51 | 26.35 | 24.21 | 24.90 | 24.89 | 26.44 | 25.18 |
| H | 52.99 | 53.70 | 53.70 | 53.49 | 54.00 | 53.31 | 53.33 | 54.09 | 54.06 |
| a | 14.06 | 14.11 | 14.51 | 15.68 | 14.23 | 14.88 | 14.87 | 15.51 | 14.78 |
| b | 18.65 | 19.21 | 19.75 | 21.18 | 19.58 | 19.97 | 19.96 | 21.51 | 20.39 |

| Intrinsic color in water of ffd powder | | | | | | | | | |
|---|---|---|---|---|---|---|---|---|---|
| L | 19.82 | 21.39 | 22.14 | 23.36 | 22.00 | 22.19 | 22.15 | 23.06 | 22.30 |
| C | 22.41 | 22.99 | 23.72 | 25.50 | 23.36 | 24.09 | 24.07 | 25.60 | 23.67 |
| H | 52.72 | 53.42 | 53.43 | 53.17 | 53.71 | 53.03 | 53.04 | 53.78 | 53.50 |
| a | 13.57 | 13.70 | 14.13 | 15.29 | 13.83 | 14.49 | 14.47 | 15.12 | 14.08 |
| b | 17.83 | 18.46 | 19.05 | 20.41 | 18.83 | 19.24 | 19.23 | 20.65 | 19.03 |

The average pH of the cocoa powder produced from the cocoa liquor was about. 4.53. The color values of the cocoa powder produced are comparable to those of the reference sample, natural liquor.

A summary of cocoa powders and pulverized cakes made from cocoa liquors during the process are shown in Table 14.

**Table 14. Comparison of cocoa powders produced.**

| Sample Description | % moisture | % fat | pH | L ffd | C ffd | H ffd | L | C | H |
|---|---|---|---|---|---|---|---|---|---|
| Pulverized cakes Made from liquor at 3 hours after process began | 3.08 | 11.71 | 4.53 | 21.48 | 23.76 | 53.87 | 23.03 | 24.65 | 54.15 |
| Pulverized cakes Made from liquor at 6.75 hours after Process began | 2.69 | 10.58 | 4.48 | 22.36 | 24.73 | 53.74 | 24.04 | 25.52 | 53.91 |
| Pulverized cakes from one press machine | 2.98 | 11.03 | 4.64 | 20.7 | 24.1 | 54.04 | 22.42 | 24.98 | 54.30 |
| Pulverized cakes from other press machine | 3.06 | 12.64 | 4.64 | 20.68 | 24.62 | 53.95 | 22.63 | 25.63 | 54.25 |
| Pulverized cakes From one batchmaker | 3.41 | 12.64 | 5.20 | 18.44 | 22.19 | 53.74 | 20.30 | 23.18 | 53.99 |
| Pulverized cakes From other batchmaker | 3.05 | 12.34 | 4.94 | 19.33 | 22.92 | 53.91 | 21.19 | 23.88 | 54.17 |
| Final powder from One batchmaker | 4.40 | 12.38 | 4.85 | 19.48 | 23.34 | 53.89 | 21.54 | 24.41 | 54.18 |
| Final powder from Other batchmaker | 4.70 | 12.73 | 5.05 | 18.30 | 22.57 | 53.52 | 20.39 | 23.69 | 53.82 |
| Reference Sample | 4.40 | 20.80 | 5.6 | 22.30 | 23.67 | 53.50 | 25.72 | 25.18 | 54.06 |

The microbiological results of the final powders produced were good and all within commercially acceptable limits for cocoa powders.

An SGS analysis on a cocoa powder produced is shown in Table 15.

**Table 15. SGS analysis on cocoa powder.**

| | |
|---|---|
| Ash content (%) | 6.59 |
| Total alkalinity (ml/100g) | 83.67 |
| Total iron as Fe (mg/kg) | 280 |
| Potassium as K (%) | 2.5 |
| Sodium as Na (%) | 0.005 |
| Aluminum as Al (mg/kg) | 89 |
| Silicium as Si (%) | <0.01 |
| Citric acid (%) | 0.97 |
| Acetic acid (%) | 0.45 |
| Lactic acid (%) | 0.33 |
| OchraToxin A (µg/kg) | 0.3 |
| Acrylamide (µg/kg) | 230 |

The values of Fe, Al, Si, and acrylamide in the cocoa powders of the present invention are much lower than those measured in natural powders typically produced.

The quality of the cocoa butters produced according to this example is good and within commercially acceptable limits.

A ratio of the concentrations of the fruity compounds of the cocoa liquor produced at various timepoints during the process compared to the reference, Arriba is shown in Table 16. The fruity flavor compounds were present in the cocoa liquor at between about: 3.28-4.26 µg/kg of ethyl-2-methylpropanoate; 9.37-10.82 µg/kg of ethyl-2-methylbutanoate; 12.95-14.55 µg/kg of ethyl-3-methylbutanoate; 220.03-269.58 µg/kg of phenylacetaldehyde; and 1257.21-1938.47 µg/kg of furaneol.

**Table 16. Fruity compound analysis, Arriba as reference.**

| Sample | Arriba | 1 | 2 | 3 | 4 | 5 | 6 | 7 | 8 |
|---|---|---|---|---|---|---|---|---|---|
| Time (hr) | | Start of Process 15:30 hr | 1 hr | 2 hrs | 3 hrs | 4 hrs | 5 hrs | 6.5 hrs | 6.75 hrs |
| Ethyl-2-methylpropanoate | 1 | 2.43 | 2.62 | 2.43 | 2.04 | 2.37 | 2.51 | 2.65 | 2.27 |
| Ethyl-2-methylbutanoate | 1 | 2.22 | 2.36 | 2.45 | 2.32 | 2.31 | 2.29 | 2.36 | 2.12 |
| Ethyl-3-methylbutanoate | 1 | 1.95 | 2.07 | 2.10 | 2.06 | 1.99 | 1.96 | 2.05 | 1.87 |
| phenylacetaldehyde | 1 | 10.31 | 11.37 | 10.87 | 10.21 | 9.28 | 9.37 | 10.85 | 9.81 |
| furaneol | 1 | 17.07 | 21.49 | 24.73 | 23.39 | 26.32 | 20.09 | 23.66 | 22.92 |

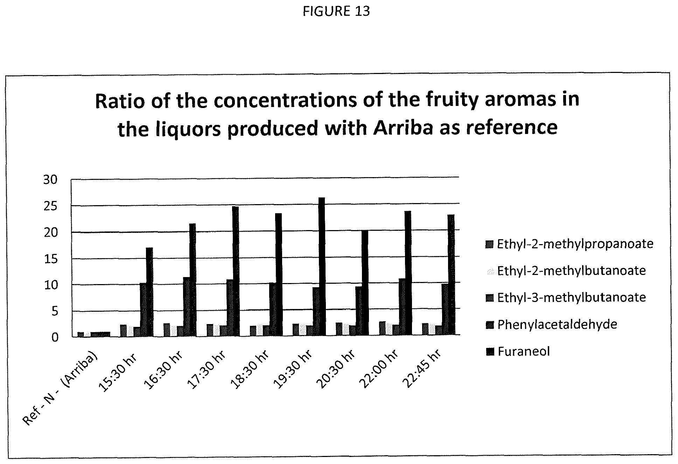

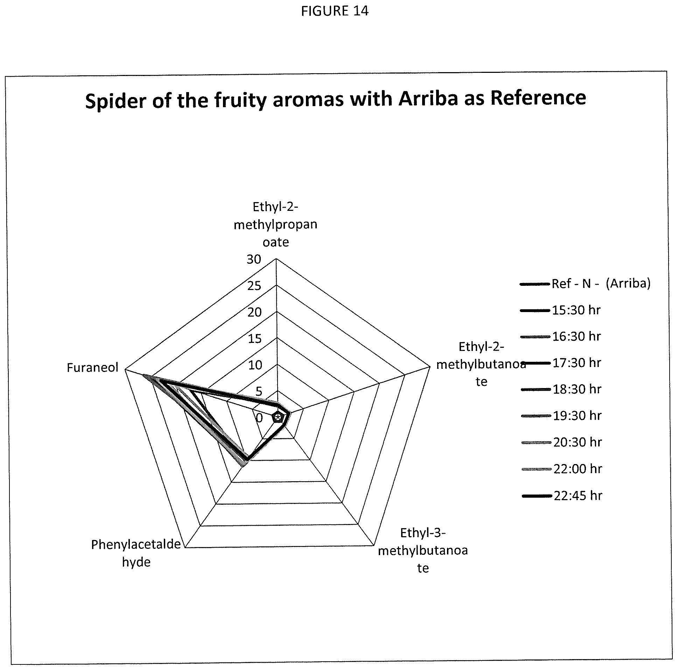

FIG. 13 shows a graph of the ratio of the concentrations of the fruity compounds of Table 16, and a spider graph of the concentrations of Table 16 is shown in FIG. 14.

A ratio of the concentrations of the fruity compounds of the cocoa liquor produced at various timepoints during the process compared to the reference, a natural liquor of 50% Ghana and 50% Ivory Coast beans is shown in Table 17.

**Table 17. Fruity compound analysis, natural liquor as reference.**

| Sample | Natural liquor | 1 | 2 | 3 | 4 | 5 | 6 | 7 | 8 |
|---|---|---|---|---|---|---|---|---|---|
| Time (hr) | | Start of Process 15:30 hr | 1 hr | 2 hrs | 3 hrs | 4 hrs | 5 hrs | 6.5 hrs | 6.75 hrs |
| Ethyl- 2-methylpropanoate | 1 | 27.59 | 29.77 | 27.58 | 23.13 | 26.96 | 28.44 | 30.13 | 25.73 |
| Ethyl-2-methylbutanoate | 1 | 5.40 | 6.58 | 6.35 | 4.88 | 7.55 | 5.68 | 6.42 | 5.89 |
| Ethyl-3-methylbutanoate | 1 | 4.69 | 4.88 | 5.65 | 4.43 | 5.46 | 4.70 | 5.37 | 5.00 |
| phenylacetaldehyde | 1 | 27.59 | 29.77 | 27.58 | 23.13 | 26.96 | 28.44 | 30.13 | 25.73 |
| furaneol | 1 | 30.77 | 32.69 | 33.97 | 32.07 | 31.97 | 31.75 | 32.69 | 29.40 |

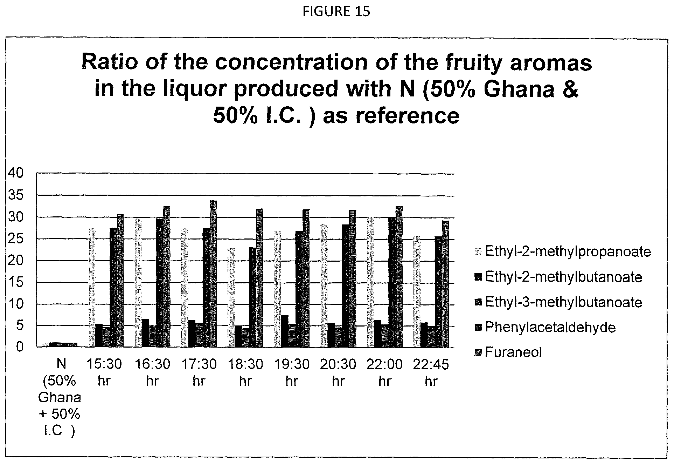

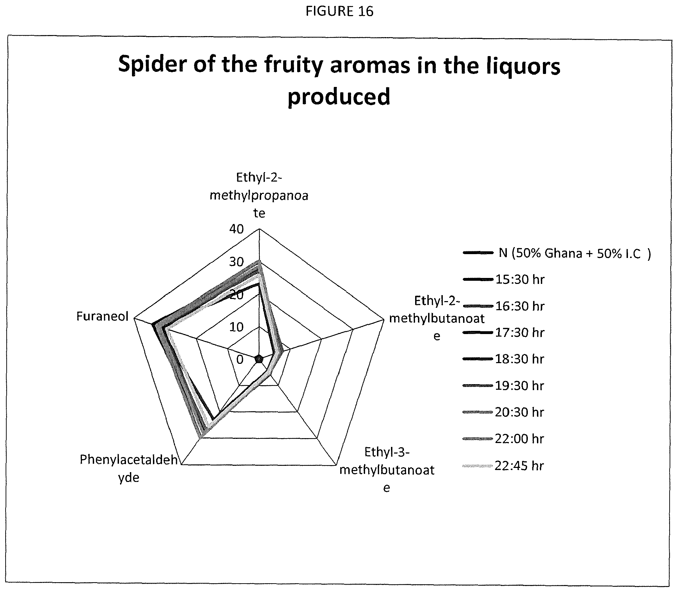

FIG. 15 shows a graph of the ratio of the concentrations of the fruity compounds of Table 16, and a spider graph of the concentrations of Table 17 is shown in FIG. 16.

A ratio of the concentrations of the fruity compounds of the cocoa liquor obtained from nibs from the nib cooler produced at various timepoints during the process compared to the reference, Arriba is shown in Table 18. The fruity flavor compounds were present in the cocoa liquor at between about: 4.63-8.85 µg/kg of ethyl-2-methylpropanoate; 17.02-20.55 µg/kg of ethyl-2-methylbutanoate; 23.15-27.44 µg/kg of ethyl-3-methylbutanoate; 316.53-435.79 µg/kg of phenylacetaldehyde; and 1710.89-2366.37 µg/kg of furaneol.

**Table 18. Fruity compound analysis of cocoa nibs from nib cooler, Arriba as reference.**

| Sample | Arriba | 1 | 2 | 3 | 4 | 5 | 6 | 7 | 8 |
|---|---|---|---|---|---|---|---|---|---|
| Time (hr) | | Start of Process 15:30 hr | 1 hr | 2 hrs | 3 hrs | 4 hrs | 5 hrs | 6.5 hrs | 6.75 hrs |
| Ethyl-2-methylpropanoate | 1 | 5.50 | 5.05 | 4.97 | 3.79 | 2.88 | 5.31 | 4.37 | 3.40 |
| Ethyl-2-methylbutanoate | 1 | 4.65 | 4.22 | 4.58 | 4.28 | 3.85 | 4.65 | 3.86 | 3.91 |
| Ethyl-3-methylbutanoate | 1 | 3.93 | 3.64 | 3.93 | 3.70 | 3.37 | 3.96 | 3.34 | 3.42 |
| phenylacetaldehyde | 1 | 13.36 | 13.77 | 15.35 | 13.35 | 15.15 | 15.90 | 18.35 | 15.82 |
| furaneol | 1 | 23.23 | 26.20 | 32.13 | 26.73 | 26.12 | 29.80 | 26.28 | 27.24 |

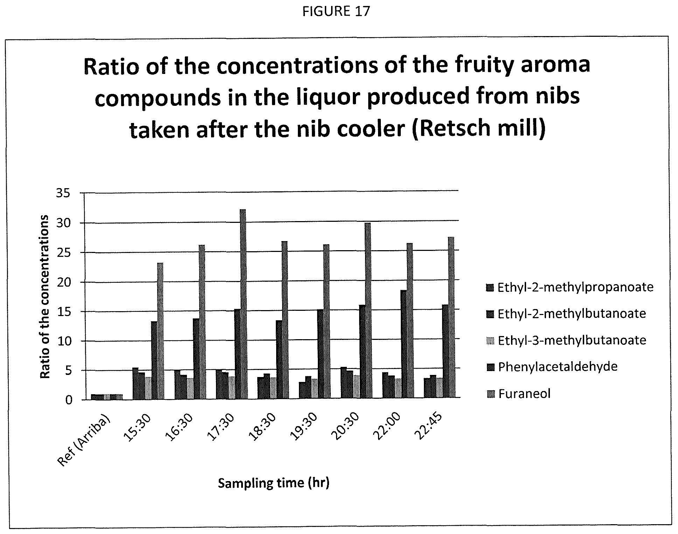

FIG. 17 shows a graph of the ratio of the concentrations of the fruity compounds of Table 18.

### Example 14. Production of dark chocolate with fruity flavored cocoa products.

Dark chocolate was made with the following ingredients: 37.18% of a fruity flavored cocoa liquor of the present invention; 22.46% of cocoa butter; 14% of a fruity flavored cocoa powder of the present invention; 25.85% of sugar; 0.5% of soy lecithin; and 0.01% of vanillin. The dark chocolate was about 72% cocoa. The chocolate was produced using a method conventionally known by one of ordinary skill in the art.

Dark chocolate was made with the following ingredients: 49.75% of a fruity flavored cocoa liquor of the present invention; 49.74% of sugar; 0.5% of soy lecithin; and 0.01% of natural vanilla. The dark chocolate was about 48% cocoa. The chocolate was produced using a method conventionally known by one of ordinary skill in the art.

Dark chocolate was made with the following ingredients: 64.5% of a fruity flavored cocoa liquor of the present invention; 9% of cocoa butter; 26% of sugar; and 0.5% of sunflower lecithin. The dark chocolate was about 71% cocoa. The chocolate was produced using a method conventionally known by one of ordinary skill in the art.

Dark chocolate with a raspberry powder was made with the following ingredients: 37.18% of a fruity flavored cocoa liquor of the present invention; 22.46% of cocoa butter; 5% of a raspberry powder; 14% of a fruity flavored cocoa powder of the present invention; 20.85% of sugar; 0.5% of soy lecithin; and 0.01% of vanillin. The raspberry flavored chocolate was about 72% cocoa. The chocolate was produced using a method conventionally known by one of ordinary skill in the art.

### Example 14. Production of a filling.

A yoghurt/ strawberry filling was made with the following ingredients: 31.35% of a cocoa butter equivalent (CBE); 7.5% of skimmed milk powder; 3% of whole milk powder; 2% of strawberry flakes; 7.5% of whey powder; 0.6% of lactose; 47.4% of sugar; 0.6% of soy lecithin; and 0.05% of natural vanilla. The filling was produced using a method conventionally known by one of ordinary skill in the art.

### Example 15. Production of a candy with a fruity flavored cocoa product.

Pralines were produced using the yoghurt/strawberry filling of Example 14 and a chocolate of Example 13 as a shell using techniques known by those of ordinary skill in the art.

### Example 16. Production of a candy with a fruity flavored cocoa product.

A yogurt/cocoa filling was produced using between 3-7% of a fruity flavored cocoa powder of the present invention. A praline was produced using the yogurt/cocoa filling and a chocolate of Example 13 as a shell.

### Example 17. Production of a cake with a fruity flavored cocoa product.

A cake was produced with the following ingredients: 250 grams of egg; 170 grams of sugar; 80 grams of flour; 80 grams of cornstarch; and 20 grams of a fruity flavored cocoa powder of the present invention. The cake was produced using a technique known by one of ordinary skill in the art.

### Example 18. Production of a cheesecake with a fruity flavored cocoa product.

Cheesecakes were produced with the following ingredients: 575 grams of curt cheese; 5 grams of egg yolk; 57.5 grams of flour; 76 grams of cornstarch; a sufficient quantity of milk; 5 grams of egg whites; 115 grams of sugar; and 2.5-10% of a fruity flavored cocoa powder of the present invention. The cheesecakes were produced using techniques known by those of ordinary skill in the art.

### Example 19. Production of a chocolate filling.

A chocolate filling was produced with the following ingredients: 38.9% of sugar; 5% of sunflower oil; 10% of whey powder; 22.5% of palm oil; 8% of white lactose; 7% of a fruity cocoa liquor of the present invention; 5% of skimmed milk powder; 3% of a fruity cocoa powder of the present invention; and 0.6% of soy lecithin. The chocolate filling was produced using techniques known by those of ordinary skill in the art.

This disclosure has been described with reference to certain exemplary embodiments, compositions and uses thereof.

## Claims

1. A cocoa product selected from the group consisting of a cocoa powder, a cocoa liquor, and a cocoa butter, the cocoa product having a fruity flavor comprising:
an increased amount of fruity aroma compounds and wherein the cocoa product comprises amounts of fruity aroma compounds of at least 2.5 µg/kg of ethyl-2-methylpropanoate, at least 7.5 µg/kg of ethyl-2-methylbutanoate, at least 10 µg/kg of ethyl-3-methylbutanoate, at least 50 µg/kg of phenylacetaldehyde, and at least 100 µg/kg of furaneol obtainable by a method comprising:
- mixing cocoa nibs, de-shelled cocoa beans, or a combination thereof with an acid and water whereby the acid is selected from the group consisting of gluconic delta lactone acid, phosphoric acid, ascorbic acid, sodium bisulphate acid, and combinations of any thereof; and
- roasting the acidified cocoa nibs, the acidified, de-shelled cocoa beans, or the combination thereof.

2. The cocoa product of claim 1, wherein the cocoa product has a color value selected from the group consisting of an L value of between 22 to 29, a C value of 23 to 30, an H value of between 35 to 55, and combinations of any thereof.

3. The cocoa product of claim 1 or 2, wherein the cocoa product has a pH of between 4.5 to 6.

4. The cocoa product of any one of claims 1-3, wherein the cocoa product comprises amounts of fruity aroma compounds of at least 5 µg/kg of ethyl-2-methylpropanoate, at least 15 µg/kg of ethyl-2-methylbutanoate, at least 20 µg/kg of ethyl-3-methylbutanoate, at least 50 µg/kg of phenylacetaldehyde, and at least 100 µg/kg of furaneol.

5. A method for producing the cocoa product having a fruity flavor of any one of claims 1-4, the method comprising: mixing cocoa nibs, de-shelled cocoa beans, or a combination thereof with an acid and water, wherein the acid is selected from the group consisting of gluconic delta lactone acid, phosphoric acid, ascorbic acid, sodium bisulphate acid, and combinations of any thereof.; and roasting the acidified cocoa nibs, the acidified, de-shelled cocoa beans, or the combination thereof and where the roasted, acidified cocoa nibs, the roasted, acidified de-shelled cocoa beans, or the combination thereof comprise amounts of fruity aroma compounds of at least 2.5 µg/kg of ethyl-2-methylpropanoate, at least 7.5 µg/kg of ethyl-2-methylbutanoate, at least 10 µg/kg of ethyl-3-methylbutanoate, at least 50 µg/kg of phenylacetaldehyde, and at least 100 µg/kg of furaneol.

6. The method according to claim 5, wherein the cocoa nibs, the de-shelled cocoa beans, or the combination thereof are good fermented.

7. The method according to claim 5 or 6, wherein the cocoa nibs, the de-shelled cocoa beans, or the combination thereof are in contact with the acid and the water at a temperature of between 15°C and 90°C.

8. The method according to any one of claims 5-7, further comprising grinding the roasted, acidified cocoa nibs, the roasted, acidified de-shelled cocoa beans, or the combination thereof thus producing cocoa liquor.

9. The method according to claim 8, further comprising separating the cocoa liquor into cocoa butter and cocoa presscake.

10. The method according to claim 9, further comprising grinding the cocoa presscake into cocoa powder.

11. The method according to any one of claims 5-10, wherein the cocoa product comprises amounts of fruity aroma compounds of at least 5 µg/kg of ethyl-2-methylpropanoate, at least 15 µg/kg of ethyl-2-methylbutanoate, at least 20 µg/kg of ethyl-3-methylbutanoate, at least 50 µg/kg of phenylacetaldehyde, and at least 100 µg/kg of furaneol.

## Patentansprüche

1. Kakaoprodukt, ausgewählt aus der Gruppe, die aus Kakaopulver, Kakaomasse und Kakaobutter besteht, wobei das Kakaoprodukt ein Fruchtaroma aufweist, umfassend:
eine erhöhte Menge an Fruchtaromaverbindungen, wobei das Kakaoprodukt Mengen an Fruchtaromaverbindungen von wenigstens 2,5 µg/kg an Ethyl-2-methylpropanoat, wenigstens 7,5 µg/kg an Ethyl-2-methyl-butanoat, wenigstens 10 µg/kg an Ethyl-3-methylbutanoat, wenigstens 50 µg/kg an Phenylacetaldehyd und wenigstens 100 µg/kg an Furaneol umfasst, erhältlich nach einem Verfahren, umfassend:
- Mischen von Kakao-Nibs, geschälten Kakaobohnen oder einer Kombination davon mit einer Säure und Wasser, wobei die Säure aus der Gruppe ausgewählt ist, die aus Glucono-delta-lactonsäure, Phosphorsäure, Ascorbinsäure, Natriumbisulfatsäure und Kombinationen davon besteht; und
- Rösten der angesäuerten Kakao-Nibs, der angesäuerten geschälten Kakaobohnen oder der Kombination davon.

2. Kakaoprodukt gemäß Anspruch 1, wobei das Kakaoprodukt einen Farbwert aufweist, der aus der Gruppe ausgewählt ist, die aus einem L-Wert von 22 bis 29, einem C-Wert von 23 bis 30, einem H-Wert von 35 bis 55 und Kombinationen davon besteht.

3. Kakaoprodukt gemäß Anspruch 1 oder 2, wobei das Kakaoprodukt einen pH-Wert von 4,5 bis 6 aufweist.

4. Kakaoprodukt gemäß einem der Ansprüche 1 bis 3, wobei das Kakaoprodukt Mengen an Fruchtaromaverbindungen von wenigstens 5 µg/kg an Ethyl-2-methylpropanoat, wenigstens 15 µg/kg an Ethyl-2-methyl-butanoat, wenigstens 20 µg/kg an Ethyl-3-methylbutanoat, wenigstens 50 µg/kg an Phenylacetaldehyd und wenigstens 100 µg/kg an Furaneol umfasst.

5. Verfahren zur Herstellung des Kakaoprodukt mit dem Fruchtaroma gemäß einem der Ansprüche 1 bis 4, wobei das Verfahren umfasst:
Mischen von Kakao-Nibs, geschälten Kakaobohnen oder einer Kombination davon mit einer Säure und Wasser, wobei die Säure aus der Gruppe ausgewählt ist, die aus Glucono-delta-lactonsäure, Phosphorsäure, Ascorbinsäure, Natriumbisulfatsäure und Kombinationen davon besteht; und Rösten der angesäuerten Kakao-Nibs, der angesäuerten geschälten Kakaobohnen oder der Kombination davon, wobei die gerösteten angesäuerten Kakao-Nibs, die gerösteten angesäuerten geschälten Kakaobohnen oder die Kombination davon Mengen an Fruchtaromaverbindungen von wenigstens 2,5 µg/kg an Ethyl-2-methylpropanoat, wenigstens 7,5 µg/kg an Ethyl-2-methylbutanoat, wenigstens 10 µg/kg an Ethyl-3-methylbutanoat, wenigstens 50 µg/kg an Phenylacetaldehyd und wenigstens 100 µg/kg an Furaneol umfassen.

6. Verfahren gemäß Anspruch 5, wobei die Kakao-Nibs, die geschälten Kakaobohnen oder die Kombination davon richtig fermentiert sind.

7. Verfahren gemäß Anspruch 5 oder 6, wobei die Kakao-Nibs, die geschälten Kakaobohnen oder die Kombination davon bei einer Temperatur zwischen 15 °C und 90 °C mit der Säure und dem Wasser in Kontakt sind.

8. Verfahren gemäß einem der Ansprüche 5 bis 7, weiterhin umfassend das Mahlen der gerösteten angesäuerten Kakao-Nibs, die gerösteten angesäuerten geschälten Kakaobohnen oder der Kombination davon unter Bildung von Kakaomasse.

9. Verfahren gemäß Anspruch 8, weiterhin umfassend das Auftrennen der Kakaomasse in Kakaobutter und Kakaopresskuchen.

10. Verfahren gemäß Anspruch 9, weiterhin umfassend das Mahlen des Kakaopresskuchens zu Kakaopulver.

11. Verfahren gemäß einem der Ansprüche 5 bis 10, wobei das Kakaoprodukt Mengen an Fruchtaromaverbindungen von wenigstens 5 µg/kg an Ethyl-2-methylpropanoat, wenigstens 15 µg/kg an Ethyl-2-methylbutanoat, wenigstens 20 µg/kg an Ethyl-3-methylbutanoat, wenigstens 50 µg/kg an Phenylacetaldehyd und wenigstens 100 µg/kg an Furaneol umfasst.

## Revendications

1. Produit de cacao choisi dans le groupe consistant en une poudre de cacao, une liqueur de cacao, et un beurre de cacao, le produit de cacao ayant une saveur fruitée comprenant :
une quantité accrue de composés d'arôme fruité et dans lequel le produit de cacao comprend des quantités de composés d'arôme fruité d'au moins 2,5 µg/kg d'éthyl-2-méthylpropanoate, d'au moins 7,5 µg/kg d'éthyl-2-méthylbutanoate, d'au moins 10 µg/kg d'éthyl-3-méthylbutanoate, d'au moins 50 µg/kg de phénylacétaldéhyde, et d'au moins 100 µg/kg de furanéol pouvant être obtenu par un procédé comprenant :
- le mélange d'éclats de cacao, de fèves de cacao écossées, ou d'une combinaison de ceux-ci avec un acide et de l'eau, moyennant quoi l'acide est choisi dans le groupe consistant en l'acide gluconique delta lactone, l'acide phosphorique, l'acide ascorbique, l'acide de bisulfate de sodium, et des combinaisons de l'un quelconque de ceux-ci ; et
- la torréfaction des éclats de cacao acidifiés, des fèves de cacao écossées acidifiées, ou de la combinaison de ceux-ci.

2. Produit de cacao selon la revendication 1, dans lequel le produit de cacao a une valeur de couleur choisie dans le groupe consistant en une valeur L entre 22 et 29, une valeur C de 23 à 30, une valeur H entre 35 et 55, et des combinaisons de l'une quelconque de celles-ci.

3. Produit de cacao selon la revendication 1 ou 2, dans lequel le produit de cacao a un pH entre 4,5 et 6.

4. Produit de cacao selon l'une quelconque des revendications 1 à 3, dans lequel le produit de cacao comprend des quantités de composés d'arôme fruité d'au moins 5 µg/kg d'éthyl-2-méthylpropanoate, d'au moins 15 µg/kg d'éthyl-2-méthylbutanoate, d'au moins 20 µg/kg d'éthyl-3-méthylbutanoate, d'au moins 50 µg/kg de phénylacétaldéhyde, et d'au moins 100 µg/kg de furanéol.

5. Procédé de production du produit de cacao ayant une saveur fruitée de l'une quelconque des revendications 1 à 4, le procédé comprenant :
le mélange d'éclats de cacao, de fèves de cacao écossées, ou d'une combinaison de ceux-ci avec un acide et de l'eau, dans lequel l'acide est choisi dans le groupe consistant en l'acide gluconique delta lactone, l'acide phosphorique, l'acide ascorbique, l'acide de bisulfate de sodium, et des combinaisons de l'un quelconque de ceux-ci ; et la torréfaction des éclats de cacao acidifiés, des fèves de cacao écossées acidifiées, ou de la combinaison de ceux-ci et où les éclats de cacao acidifiés torréfiés, les fèves de cacao écossées acidifiées et torréfiées, ou la combinaison de ceux-ci comprennent des quantités de composés d'arôme fruité d'au moins 2,5 µg/kg d'éthyl-2-méthylpropanoate, d'au moins 7,5 µg/kg d'éthyl-2-méthylbutanoate, d'au moins 10 µg/kg d'éthyl-3-méthylbutanoate, d'au moins 50 µg/kg de phénylacétaldéhyde, et d'au moins 100 µg/kg de furanéol.

6. Procédé selon la revendication 5, dans lequel les éclats de cacao, les fèves de cacao écossées, ou la combinaison de ceux-ci sont bien fermentés.

7. Procédé selon la revendication 5 ou 6, dans lequel les éclats de cacao, les fèves de cacao écossées, ou la combinaison de ceux-ci sont en contact avec l'acide et l'eau à une température entre 15 °C et 90 °C.

8. Procédé selon l'une quelconque des revendications 5 à 7, comprenant en outre la mouture des éclats de cacao acidifiés torréfiés, des fèves de cacao écossées acidifiées et torréfiées, ou de la combinaison de ceux-ci produisant ainsi une liqueur de cacao.

9. Procédé selon la revendication 8, comprenant en outre la séparation de la liqueur de cacao en beurre de cacao et tourteau de cacao.

10. Procédé selon la revendication 9, comprenant en outre la mouture du tourteau de cacao en poudre de cacao.

11. Procédé selon l'une quelconque des revendications 5 à 10, dans lequel le produit de cacao comprend des quantités de composés d'arôme fruité d'au moins 5 µg/kg d'éthyl-2-méthylpropanoate, d'au moins 15 µg/kg d'éthyl-2-méthylbutanoate, d'au moins 20 µg/kg d'éthyl-3-méthylbutanoate, d'au moins 50 µg/kg de phénylacétaldéhyde, et d'au moins 100 µg/kg de furanéol.
